(19) Europäisches Patentamt
European Patent Office
Office européen des brevets

(11) **EP 3 186 203 B1**

(12) **EUROPÄISCHE PATENTSCHRIFT**

(45) Veröffentlichungstag und Bekanntmachung des Hinweises auf die Patenterteilung:
**06.03.2019 Patentblatt 2019/10**

(21) Anmeldenummer: **15762517.9**

(22) Anmeldetag: **27.08.2015**

(51) Int Cl.:
**C03B 9/38** (2006.01)

(86) Internationale Anmeldenummer:
**PCT/EP2015/069695**

(87) Internationale Veröffentlichungsnummer:
**WO 2016/030484 (03.03.2016 Gazette 2016/09)**

(54) **VERFAHREN ZUR REGELUNG EINER KÜHLUNG, HERSTELLUNGSVERFAHREN UND EINRICHTUNG ZUM REGELN UND STEUERN SOWIE HERSTELLUNGSVORRICHTUNG FÜR GLASKÖRPER**

METHOD FOR CONTROLLING A COOLING PROCESS, PRODUCTION METHOD AND OPEN-LOOP AND CLOSED-LOOP CONTROL DEVICE AS WELL AS PRODUCTION APPARATUS FOR GLASS BODIES

PROCÉDÉ DE RÉGULATION DU REFROIDISSEMENT PROCÉDÉ DE FABRICATION ET DISPOSITIF DE RÉGULATION ET DE COMMANDE ET DISPOSITIF DE FABRICATION D'ÉLÉMENTS EN VERRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2014 DE 102014217045**

(43) Veröffentlichungstag der Anmeldung:
**05.07.2017 Patentblatt 2017/27**

(73) Patentinhaber: **Software & Technologie Glas GmbH (STG)**
**03051 Cottbus-Kiekebusch (DE)**

(72) Erfinder:
• **HEMMANN, Norwid**
**03050 Cottbus (DE)**
• **HEMMANN, Peter**
**03050 Cottbus (DE)**
• **SCHULZ, Thomas**
**03159 Döbern (DE)**
• **SCHÜTZEL, Matthias**
**01979 Lauchhammer (DE)**

(74) Vertreter: **Eisenführ Speiser**
**Patentanwälte Rechtsanwälte PartGmbB**
**Anna-Louisa-Karsch-Strasse 2**
**10178 Berlin (DE)**

(56) Entgegenhaltungen:
**DE-C1- 19 728 425     GB-A- 2 011 128**
**GB-A- 2 182 924     US-A- 3 953 188**

**Beschreibung**

Die Erfindung betrifft ein Verfahren zur Regelung einer Kühlung einer Anzahl von Glasformen bei einer Herstellung von Glaskörpern, insbesondere von Hohl-Glaskörpern, in einer Sektions-Maschine mit einer weiteren Anzahl von Produktionssektionen, wobei einer Produktionssektion der Sektions-Maschine jeweils wenigstens eine Glasform zugeordnet ist, insbesondere wobei als Kühlmedium ein Kühlgas, insbesondere eine Kühlluft, verwendet wird und/oder die Sektions-Maschine eine Individual-Sektions-Maschine (IS-Maschine) oder Rotations-Sektions-Maschine (Rotationsblasmaschine) ist, und zur Kühlung der Anzahl von Glasformen ein für die Anzahl von Glasformen gemeinsames Kühlmedium den Glasformen zugeführt wird, wobei die Kühlung für die Anzahl von Glasformen gemeinsam geregelt wird und dem Kühlmedium eine Anzahl absoluter Kühlmediumparameter zugeordnet wird und die absoluten Kühlmediumparameter als für die Anzahl von Glasformen gemeinsame Kühlmediumparameter bestimmt werden.

Die Erfindung betrifft auch ein Herstellungsverfahren gemäß dem Oberbegriff des Anspruchs 17 sowie eine Steuer- und/oder Regeleinrichtung gemäß dem Oberbegriff des Anspruchs 19 und eine Herstellungsvorrichtung für Glaskörper gemäß dem Oberbegriff des Anspruchs 20.

Zur maschinellen automatisierten Herstellung von Glaskörpern wird bei einer an sich bekannten Sektions-Maschine mit einer Anzahl von Produktionssektionen jeweils ein flüssiger heißer Glastropfen in eine Glasform einer Produktionssektion eingebracht. Einer Produktionssektion der Sektions-Maschine ist jeweils wenigstens eine Glasform zugeordnet. So gibt es Sektionsmaschinen mit jeweils einer aber auch jeweils zwei oder auch vier Glasformen je Sektion, z. B. eine Doppeltropfen-10-Stationen-IS-Maschine. Die Glasform wird zur Minderung einer Überhitzung derselben gekühlt, zumeist mit einem Kühlmedium in Form von Kühlluft, Kühldampf oder anderen Kühlgasen oder Kühlfluiden wie z.B. möglicherweise auch Wasser. Da die Kühlung der Glasform auch Einfluss auf den hergestellten Glaskörper infolge der Temperierung der Glasform hat, ist eine angemessene Kühlung erforderlich, zumeist erfolgt diese aber ungeregelt.

Soweit eine Kühlung im Rahmen eines Regelungs- oder Steuerungsverfahrens umgesetzt wird, gehen übliche zu bevorzugende Maßnahme davon aus, dass sämtliche der Produktionssektionen der Sektions-Maschine mit einem für alle Produktionssektionen gemeinsam zur Verfügung gestellten und dementsprechend angepassten, d. h. gesteuerten oder geregelten Kühlmedium-Strom von Kühlmedium versorgt werden können. Derartige Maßnahmen sehen beispielsweise wie in GB 1 273 579 das Messen einer Glasform-Temperatur und die entsprechende Anpassung eines Volumens oder einer Masse eines Kühlmediums des Kühlmedium-Stroms vor. Eine Messung der Temperatur der Glasform kann beispielsweise über einen Temperatursensor oder auch über die Wärmestrahlung, wie in US 5,548,633 beschrieben, erfolgen. Es hat sich gezeigt, dass solche Ansätze zur Versorgung aller Produktionssektionen mit einem für alle Glasformen der Produktionssektionen gemeinsam geregelten und/oder gesteuerten und darüber eingestellten Kühlmedium-Strom problematisch sein können aufgrund der individuellen Bedingungen an jeder einzelnen Produktionssektion.

So schlagen Maßnahmen wie in DE 197 56 313 A1 vor, zur Regelung der Kühlleistung für alle Produktionssektionen gemeinsam eine einzige Schnittmessgröße zu konstruieren. Eine solche Maßnahme hat sich als grundsätzlich vorteilhaft herausgestellt, da sie auf die Regelung primär der Kühlleistung abstellen kann. Damit kann eine verlässliche Regelung zur Verfügung gestellt werden, während die Regelung einer Kühlleistung für alle Stationen gemeinsam ein vergleichsweise gutes Regelungsverfahren mit vergleichsweise geringem Aufwand darstellen kann. Allerdings erweist sich der Ansatz eines dort vorgesehenen Regelmoduls als noch verbesserbar, da dies zur Veränderung der Schnittfrequenz auf der Grundlage der sortenspezifischen Formenoberflächeninnentemperatur vorgesehen ist.

Diese Temperatur wird über einen optischen Sensor bei jedem Öffnen der Formen ermittelt, um bei Abweichungen von einem vorgegebenen sortenspezifischen Wert die Kühlluftmenge so zu verändern, dass der Sollwert wieder erreicht wird. Die Oberflächeninnentemperatur der Vor- oder Fertigform wird mit einem optischen Temperatursensor mit einem Messbereich von 8 bis 14 $\mu$m sowie der Feuchtigkeitsgehalt des Kühlmediums wird gemessen und mittels Rechner wird die für die effektive Kühlleistung verantwortliche Schnittfrequenz und über die Menge, Temperatur und Luftfeuchtigkeit des Kühlmediums die Formenoberflächeninnentemperatur gesteuert.

Nochmals sehr viel aufwändigere Maßnahmen in EP 1 136 453 A1 sehen für jede Produktionssektion einen separaten Kühlapparat vor, der individuell den Volumen- oder Massestrom der Kühlluft oder die Druckbedingungen der Kühlluft an jeder einzelnen Produktionssektion einzustellen in der Lage ist; in dem Fall durch einen für jede Produktionssektion vorgesehenen individuellen Ventilator und Kühler für die Kühlluft.

Andere aufwändige Maßnahmen sehen, wie in DE 10 2004 054 254 B4 beschrieben, vor, dass eine automatische Beeinflussung der Kühlleistung durch elektrische, hydraulische oder pneumatische Stellglieder für jede Station oder jede Form wiederum separat erfolgt. Erfindungswesentlich für dieses Verfahren des Standes der Technik ist, dass die Formeninnentemperaturen der einzelnen Stationen oder Formen, vorzugsweise mit einem berührungslosen, Temperatursensor zyklisch erfasst werden, der zur Messung der Einzeltemperaturen mittels einer automatischen Positioniereinrichtung verfahren wird. Durch Vergleich zwischen den so erzeugten Regelgrößen und den Führungsgrößen sowie separater Bildung der Stellgrößen wird die Formeninnentemperatur jeder Station automatisch geregelt und an die Zielvorgaben der Sollwerte angepasst. Lediglich zur Energieeinsparung kann zusätzlich eine Optimierung erfolgen, indem die erzeugte Gesamtkühlleistung durch eine geregelte oder gesteuerte Anpassung auf die tatsächlich benötigte Gesamtkühlleistung reduziert wird, z. B. durch Veränderung der Drehzahl des Ventilators V über einen Frequenzumrichter, der Veränderung des Vordrucks oder durch Vorschaltung eines Drallreglers.

Es zeigt sich, dass der Kompromiss zwischen einem apparativem Aufwand bzw. dem Aufwand einer Regelung zur Kühlung einer ersten Anzahl von Glasformen unter Einhaltung von Qualitätsstandards für die hergestellten Glaskörpern in vielen Fällen zu Lasten der Komplexität und Kosten der Kühlsysteme geht. Andere vergleichsweise einfache Lösungen sehen zwar die Möglichkeit vor, eine Kühlung für alle Produktionssektionen der Sektions-Maschine gemeinsam einzustellen. Diese stellen jedoch fälschlicherweise auf den Durchsatz des Kühlmediums, wie einen Kühlluftmassen- oder Volumenstrom, ab; wie z. B. in DE 197 28 425 C1 in Abhängigkeit von einer Glasform-Temperatur. Dies hat zur Folge, dass Unregelmäßigkeiten an einer Produktionssektion --wie beispielsweise der nicht zu vermeidende Kühlluftunterbrechung beim Auswechseln einer Produktionssektion oder beim Entfernen einer Glasform oder andere durchaus häufig auftretende Eingriffe in die Produktionsmaschine-- fälschlicherweise ausgeregelt werden und so Einfluss haben auf die Herstellung eines Glaskörpers in den anderen Glasformen, ohne dass dazu eine Notwendigkeit gegeben wäre.

GB 2 011 128 A beschreibt ein Kühl-Steuersystem zum Kühlen von Teilen einer Anlage zum Herstellen von Glaskörpern, wobei zur Steuerung der Kühlluft die Kühlkapazität der Kühlluft über die Oberflächentemperatur eines Messkörpers gemessen und der Druck der Kühlluft gemessen wird. Die Steuerung orientiert sich daran einen Druck der Kühlluft in einer Kühlluftleitung im Wesentlichen zu halten, welches wiederum von der Temperaturmessung der Oberfläche des Messkörpers im Kühlluftstrom abhängt.

GB 2 182 924 A offenbart ein Verfahren zum Betrieb einer Anlage für Glasformen bei welchem Umgebungsluft abhängig der Geschwindigkeit der Kühlluft zur Kühlung der Glasformen angepasst wird um einer variierenden Kühlkapazität der Kühlluft Rechnung zu tragen.

US 3,953,188 beschreibt ein Verfahren zur Kühlung von Glasformen einer Glasformmaschine auf Basis einer Steuerung des Drucks der Kühlluft wobei der Druck wesentlich konstant gehalten wird um Änderungen in der Temperatur und der Massenflussrate des Glases Rechnung zu tragen.

Lediglich die in GB 2 011 128 A vorgesehene Temperaturmessung zur Besteuerung des Luftmassenstroms um den Druck auf einem Druckpunkt zu halten erweist sich als unzureichend für eine verlässliche Regelung der Kühlung.

Die in GB 2 182 924 A vorgeschlagene Anpassung der Geschwindigkeit der Maschine in Abhängigkeit der gemessenen Kapazität erweist sich als nachteilig für das Regelungssystem. Die in US 3,953,188 vorgeschlagene Druckänderung in der Kühlluft, abhängig von der Temperaturänderung der Kühlluft, um eine konstante Temperatur der Glasrohling aufrecht zu erhalten, erweist sich ebenfalls als unzureichend.

Letztlich ist eine Präferenz des Kühlluftdrucks als Stellgröße eines Regelkreises, wie sie in GB 2 011 128 A und US 3,953,188 vorgeschlagen ist, unzureichend zur Erzielung eines einfachen, robusten und gleichwohl verlässlichen Kühlungsergebnisses. Hinzu tritt, dass die in GB 2 011 128 A und GB 2 182 924 A vorgeschlagenen Temperatursonden zwar eine Kühlleistung des Kühlluftstroms messen, nicht aber die zur ausreichenden Kühlung der Glasform erforderliche Kühlleistung.

Wünschenswert ist es, eine vergleichsweise einfache und robuste, gleichwohl verlässliche Kühlung der Glasformen bei einer Sektions-Maschine zur Verfügung zu stellen. Insbesondere soll eine in DE 197 56 313 A1 konzeptionierte Kühlleistung basierte Regelung für alle Stationen gemeinsam verbessert werden.

An dieser Stelle setzt die Erfindung an, deren Aufgabe es ist, ein Verfahren und eine Herstellung und eine Vorrichtung zur Regelung anzugeben, bei der die eingangs genannten Probleme jedenfalls ansatzweise behoben oder gemindert werden. Insbesondere ist es eine Aufgabe der Erfindung, eine verbesserte Herstellung und Vorrichtung anzugeben. Vorzugsweise soll das Verfahren und die Vorrichtung eine jedenfalls grundsätzlich für alle Produktionssektionen der Sektions-Maschine gemeinsame Regelung, d.h. insbesondere unter Berücksichtigung einer Anzahl absoluter Kühlmediumparameter, zur Kühlung der Anzahl von Glasformen zur Verfügung stellen. Primär soll auf die Regelung der Kühlfähigkeit, ggfs. aber auch auf die Regelung einzelner Kühlmediumparameter einzeln oder in Kombination, für alle Stationen gemeinsam abgestellt werden. Insbesondere soll vorzugsweise auf die Regelung der Kühlleistung und/oder Kühlkapazität abgestellt werden und/oder einzeln oder in Kombination auf die Regelung einer Kühlmediumtemperatur und/oder Kühlmediumfeuchte. Insofern kann zur Regelung einer Kühlfähigkeit insbesondere eine Regelung einer Kühlleistung und/oder einer Kühltemperatur und/oder einer Kühlmediumfeuchte vorgesehen sein. Dies soll jedoch nicht ausschließen, dass gleichwohl individuell für jede Produktionssektion zusätzliche Regelungsmaßnahmen oder Einstellmaßnahmen möglich sind.

Die Aufgabe hinsichtlich des Verfahrens wird mit einem Verfahren des Anspruchs 1 zur Regelung einer Kühlung einer Anzahl von Glasformen bei einer Herstellung von Glaskörpern, insbesondere von Hohl-Glaskörpern, in einer Sektions-Maschine mit einer weiteren Anzahl von Produktionssektionen gelöst, wobei einer Produktionssektion der Sektions-Maschine jeweils eine Glasform zugeordnet ist.

Vorzugsweise handelt es sich bei den Glaskörpern um Hohl-Glaskörper. Als Kühlmedium kann ein Kühlgas, insbesondere eine Kühlluft oder Kühldampf, oder ein anderes Kühlfuid wie ein Wasserdampf verwendet werden oder ein mit Wasserdampf angesättigtes gasförmiges Kühlmedium; grundsätzlich kann zur Variation einer Kühlkapazität des Kühlmediums eine Zusammensetzung desselben variiert werden. So kann grundsätzlich gleichwohl auch eine Wasserkühlung oder sonstige Flüssigkeitskühlung vorgesehen sein.

Die vorgenannten Erläuterungen sind allgemein für jede Art einer Sektions-Maschine mit mehreren Produktionssektionen vorteilhaft anwendbar. Die Sektions-Maschine ist bevorzugt eine Individual-Sektions-Maschine (IS-Maschine) oder Rotations-Sektions-Maschine (Rotationsblasmaschine). Beide Arten einer Sektions-Maschine sind dem Fachmann im grundsätzlichen Aufbau --im einen Fall mit Produktionssektionen nebeneinander, im anderen Fall auf einem Karussell-- bekannt. Im Übrigen ist die Anwendung des Konzepts der Erfindung nicht auf die genannten bevorzugten Sektions-Maschinen beschränkt.

Zur Kühlung der Anzahl von Glasformen wird der Anzahl von Glasformen das Kühlmedium gemeinsam zugeführt, wobei die Zuführung des gemeinsamen Kühlmediums für die Anzahl von Glasformen gemeinsam geregelt wird und dem gemeinsamen Kühlmedium eine Anzahl absoluter Kühlmediumparameter zugeordnet wird und die absoluten Kühlmediumparameter als für die Anzahl von Glasformen gemeinsame Kühlmediumparameter bestimmt werden.

Erfindungsgemäß ist vorgesehen, dass dem Kühlmedium als für die Anzahl von Glasformen gemeinsam einstellbare absolute Kühlmediumparameter wenigstens eine Kühlfähigkeit und ein Kühldruck zugeordnet und eingestellt werden, insbesondere gesteuert und/oder geregelt werden, wobei

- basierend auf einer gewünschten Kühlfähigkeit des Kühlmediums mittels einer primären Stelleinrichtung eine Kühlfähigkeitsgröße ermittelt und die Kühlfähigkeitsgröße einer sekundären Stelleinrichtung vorgegeben wird, und

- abhängig von der vorgegebenen Kühlfähigkeitsgröße mittels der sekundären Stelleinrichtung basierend auf dem Kühldruck des Kühlmediums eine Kühldruckgröße vorgegeben wird, derart dass sich eine Kühlfähigkeit des Kühlmediums der gewünschten Kühlfähigkeit des Kühlmediums annähert.

Unter einer Kühlfähigkeit gemäß dem Konzept der Erfindung ist grundsätzlich die Fähigkeit des Kühlmediums gemeint, Wärme aufzunehmen und abzuführen.

Die Aufgabe hinsichtlich des Verfahrens wird weiter mit einem Herstellungsverfahren des Anspruchs 17 gelöst. Die Aufgabe hinsichtlich der Vorrichtung wird mit einer Steuer- und/oder Regeleinrichtung des Anspruchs 19 und einer Herstellungsvorrichtung des Anspruchs 20 gelöst.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Vorzugsweise ist die Kühlfähigkeit eine Kühlleistung und/oder eine Kühlkapazität bzw. eine Kühlleistung und/oder eine Kühlkapazität beschreibende Größe. Vorzugsweise wird dem Kühlmedium als für die Anzahl von Glasformen gemeinsam einstellbare absolute Kühlmediumparameter wenigstens eine Kühlleistung und ein Kühldruck zugeordnet und eingestellt, insbesondere gesteuert und/oder geregelt, wobei

- basierend auf einer gewünschten Kühlleistung des Kühlmediums mittels einer primären Stelleinrichtung eine Kühlleistungsgröße ermittelt und die Kühlleistungsgröße einer sekundären Stelleinrichtung vorgegeben wird, und

- abhängig von der vorgegebenen Kühlleistungsgröße mittels der sekundären Stelleinrichtung basierend auf dem Kühldruck des Kühlmediums eine Kühldruckgröße vorgegeben wird, derart dass sich eine Kühlleistung des Kühlmediums der gewünschten Kühlleistung des Kühlmediums annähert.

Beispielsweise kann die Kühlfähigkeit durch eine geregelte Kühlleistung verbessert sein. Insbesondere kann eine die Kühlfähigkeit beschreibende Größe eine definierte Kühlleistung unter Berücksichtigung eines Masse- und/oder Volumenstroms des Kühlmediums, einer Temperatur des Kühlmediums und einer Kühlmediumfeuchte sein. Vorzugsweise ist eine definierte Kühlleistung proportional dem Produkt aus Masse- und/oder Volumenstrom des Kühlmediums, Temperatur des Kühlmediums und Kühlmediumfeuchte, insbesondere relative Kühlmediumfeuchte, und Kühlkapazität.

Vorzugsweise umfasst die Kühlfähigkeitsgröße, insbesondere die Kühlleistungsgröße, eine oder mehrere der Größen, die ausgewählt sind aus der Gruppe bestehend aus: Kühlleistung des Kühlmediums, insbesondere absolute Kühlleistung des Kühlmediums, das einer zweiten Anzahl von Produktionssektionen der Sektions-Maschine gemeinsam zugeführt wird.

Vorzugsweise betrifft die Kühlfähigkeit also eine Kühlleistung. Insbesondere kann die Kühlfähigkeit jedoch auch --nach Bedarf auch lediglich-- durch Erhöhung eines Kühlmediumparameters wie beispielsweise einer Temperatur des Kühlmediums oder einer Kühlmediumfeuchte gegeben sein; insofern insbesondere durch solche Kühlmediumparameter, welche die Kühlleistung unmittelbar beeinflussen und die Umgebung dominieren. In einer Variante betrifft die Kühlfähigkeit zusätzlich oder alternativ zur Kühlleistung solche Kühlmediumparameter, welche die Kühlleistung unmittelbar beeinflussen; insbesondere kann in einer vereinfachten Variante die Kühlfähigkeit auch ohne die Bestimmung der Kühlleistung auskommen und nur mit Kühlmediumparametern erfolgen, welche in die Kühlleistung situationsabhängig maßgeblich eingehen, also in der Umgebung dominieren. Demnach kann eine Kühlfähigkeit bzw. eine die Kühlfähigkeit beschreibende Größe zusätzlich oder alternativ eine Temperatur des Kühlmediums und/oder eine Kühlmediumfeuchte wahlweise unter Berücksichtigung eines Masse- und/oder Volumenstroms des Kühlmediums sein.

Die Kühlfähigkeit kann grundsätzlich allein oder in Kombination auch eine erwähnte Kühlkapazität betreffen. Vorzugsweise kann eine die Kühlkapazität beschreibende Größe eine Zusammensetzung des Kühlmediums sein, insbesondere ein Dampfanteil sein. Insbesondere kann zur Abstimmung zusätzlich oder alternativ eine Kühlkapazität genutzt werden, z. B. durch die Auswahl oder Abstimmung der Zusammensetzung eines Kühlmediums wie beispielsweise aus Gas, Dampf, Luft, Wasser oder dergleichen gegeben sein. Vorzugsweise ist Kühlkapazität des Kühlmediums eine absolute Kühlkapazität des Kühlmediums, das einer zweiten Anzahl von Produktionssektionen der Sektions-Maschine gemeinsam zugeführt wird.

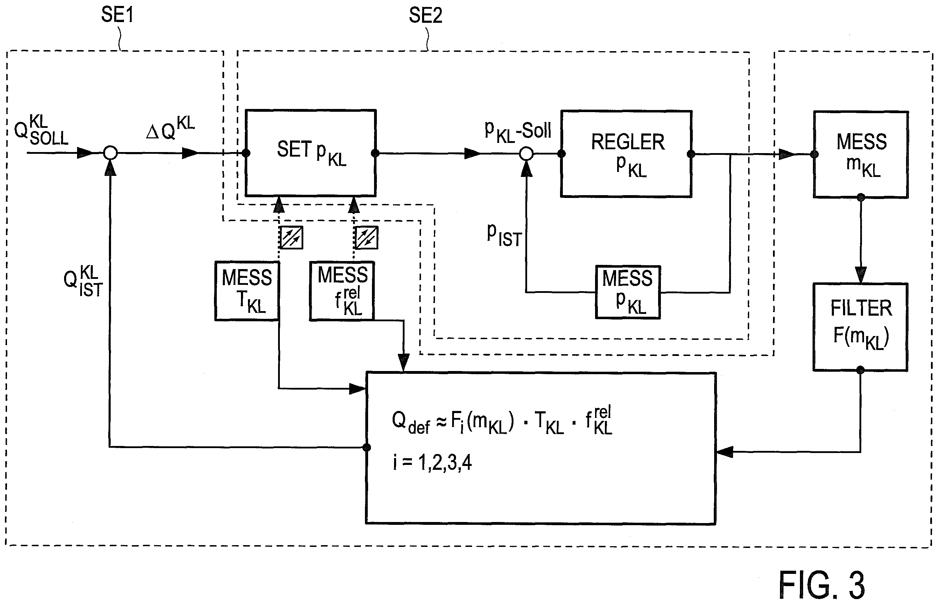

Diesbezüglich bevorzugte Varianten einer Ausführungsform sind in Bezug auf FIG.3 erläutert.

Vorzugsweise umfasst die primäre Stelleinrichtung eine Steuer- und/oder Regeleinrichtung mittels der die Kühlfähigkeit, insbesondere eine Kühlleistung, in Abhängigkeit einer Glasform-Temperatur geregelt und/oder gesteuert wird. Grundsätzlich kann die primäre Stellungeinrichtung und/oder die sekundäre Stelleinrichtung als Steuereinrichtung oder Regeleinrichtung oder als Kombination einer Steuer- und Regeleinrichtung, z. B. im Rahmen einer Kombination einer Vorsteuerung und einer Regeleinrichtung jeweils für die primäre Stelleinrichtung bzw. die sekundäre Stelleinrichtung gebildet sein. Es kann auch beispielsweise die primäre Stelleinrichtung im Rahmen einer Steuereinrichtung realisiert sein und die sekundäre Stelleinrichtung im Rahmen einer Regeleinrichtung gebildet sein. Vorteilhaft umfasst die primäre Stelleinrichtung eine Steuer- und/oder Regeleinrichtung mittels der die Kühlleistung in Abhängigkeit einer Glasform-Temperatur geregelt und/oder gesteuert wird, insbesondere im Rahmen einer Vorsteuerung, welcher eine Regelung der Kühlleistung nachgelagert ist, insbesondere die Kühlleistung mit einem variabel vorgebbaren aber festen Wert konstant gesteuert wird.

Mittlerweile haben sich bevorzugte Verfahren einer Temperaturmessung bei einer Glasform als möglich erwiesen, beispielsweise über einen IR-Sensor, so dass ein entsprechender Regelkreis zur Vorgabe einer Kühlleistung in Abhängigkeit einer Glasform-Temperatur vorteilhaft zur Verfügung stellen lässt. Gleichwohl kann dennoch auch beispielsweise die Kühlleistung in Abhängigkeit einer Glasform-Temperatur gesteuert werden, zum Beispiel im Rahmen einer Vorsteuerung, welcher eine Regelung der Kühlleistung und/oder Regelung einer Kühldruckgröße nachgelagert ist. Je nach Umgebungsbedingungen kann es sich auch als vorteilhaft erweisen, dass für bestimmte Zeiträume die Kühlleistung mit einem variabel vorgebbaren, aber für diesen Zeitraum festen Wert konstant gehalten wird im Rahmen einer entsprechenden Steuerung.

Vorteilhaft umfasst die sekundäre Stelleinrichtung eine Steuer- und/oder Regeleinrichtung mittels der die Kühldruckgröße in Abhängigkeit der vorgegebenen Kühlleistung geregelt und/oder gesteuert wird, insbesondere im Rahmen einer Vorsteuerung, der eine Regelung der Kühldruckgröße nachgelagert ist, insbesondere umfasst die sekundäre Stelleinrichtung eine Messwerterfassung für wenigstens die Kühldruckgröße umfasst. Diese und andere Möglichkeiten der Realisierung einer Stelleinrichtung können sich je nach Anlagenvorgabe bzw. der technischen Funktionalität einer konkreten Sektions-Maschine ergeben.

Beispielsweise kann eine Steuer- und/oder Regeleinrichtung der sekundären Stelleinrichtung zum regeln und/oder steuern der Kühldruckgröße beispielsweise umfassen:

- einen Frequenzumrichter, der die Geschwindigkeit eines Motors eines Kühlluftventilators oder einer Kühlmittelpumpe steuert; oder
- eine Regelklappe im Kühlmittelstrom, beispielsweise eine als "Drallregler" bezeichnete Regelklappe; oder
- eine Kombination aus beiden. Bei einer Kombination kann die Position der Regelklappe so gewählt werden, dass der Frequenzumrichter in einem optimalen Arbeitsbereich steuern kann. Oder es kann der Ausgang des Frequenzumrichters so gewählt werden, dass die Regelklappe in einem optimalen Arbeitsbereich regeln kann.

Vorzugsweise werden dem Kühlmedium für die Anzahl von Glasformen gemeinsam ermittelbare absolute freie oder andere Kühlmediumparameter zugeordnet und bestimmt und diese mittels einem Filter zum Filtern wenigstens eines der freien Kühlmediumparameter aufbereitet. Vorzugsweise werden also dem Kühlmedium für die Anzahl von Glasformen auch andere gemeinsame absolute Kühlmediumparameter zugeordnet und bestimmt mittels einem Filter zum Filtern wenigstens eines der gemeinsamen absoluten Kühlmediumparameter. Insbesondere umfasst die primäre Stelleinrichtung: eine Erfassung, insbesondere Messwerterfassung, und einen Filter, für den wenigstens einen Kühlmediumparameter, insbesondere freien Kühlmediumparameter.

Unter einem freien Kühlmediumparameter ist insbesondere ein solcher zu verstehen, der nicht eingestellt wird, insbesondere nur gemessen wird. Vorzugsweise weist die primäre Stelleinrichtung eine Messwerterfassung auf für wenigstens einen oder mehrere der Kühlmediumparameter, die ausgewählt sind aus der Gruppe: Kühlmediumtemperatur, Kühlmediumfeuchte, insbesondere relative Kühlmediumfeuchte, Masse- und /oder Volumenstrom des Kühlmediums. Zusätzlich oder alternativ können die Kühlmediumparameter am Kühlmedium gemessen werden und/oder ein Messwert in einem Filter gefiltert werden.

Im Rahmen einer weiteren besonders bevorzugten Weiterbildung wird die vorgegebene Kühlleistungsgröße ermittelt mittels einem Filter zum Filtern wenigstens eines freien Kühlmediumparameters. Der Filter ist vorteilhaft im Rahmen der primären Stelleinrichtung realisiert. Vorteilhaft ist im Rahmen der sekundären Stelleinrichtung eine Messwerterfassung für die Kühldruckgröße realisiert, insbesondere als notwendiger Bestandteil einer entsprechenden Regeleinrichtung für die Kühldruckgröße. Darüber hinaus können Messwerterfassungen für die freien Kühlmediumparameter, insbesondere die Temperatur der Kühlluft, die Feuchte der Kühlluft und ein Masse- und/oder Volumenstrom der Kühlluft in der primären Stelleinrichtung realisiert werden.

Vorteilhaft umfasst die primäre Stelleinrichtung den Filter und eine Messwerterfassung für wenigstens einen, insbesondere freien, Kühlmediumparameter; vorzugsweise einen Masse- und /oder Volumenstrom des Kühlmediums und/oder die Kühlleistung und/oder einen Kühldruck. Diese Weiterbildung hat erkannt, dass ein Großteil der Probleme bei Glasherstellungsmaschinen mit zentral geregelter Kühlmediumzufuhr dadurch entsteht, dass bei bestimmten Produktionssektionen Veränderungen in der Sektions-Maschine vorgenommen werden, welche aufgrund der für alle Produktionssektionen gemeinsamen Regelung eines Kühlmediums bei anderen Produktionssektionen unrichtigerweise Auswirkungen haben.

Die Weiterbildung hat erkannt, dass es einer vereinfachten Anlagenwartung zuträglich ist als auch einer gesicherten Qualität der Hohlglaskörper zuträglich ist, wenn solche als externe Störungen bezeichnete Eingriffe in die Glasherstellungsmaschine keinen Eingang in die Ausregelungstätigkeit finden. Das Konzept der Erfindung im Rahmen dieser Weiterbildung geht insbesondere davon aus, dass es einer Handhabung der Herstellungsvorrichtung und einer Produktqualität zuträglicher ist, die Regelung auf Basis einer primären Stelleinrichtung und sekundären Stelleinrichtung zum Einstellen der Kühlleistung und der Kühldruckgröße --insbesondere auf den Ausgleich von Feuchte und Temperatur der Umgebung oder anderen Umgebungsparametern-- auszurichten, während externe Störungen heraus gefiltert werden aus geeigneten Kühlmediumparameter, vorzugsweise aus einem Masse- und/oder Volumenstrom des Kühlmediums und/oder die Kühlleistung und/oder einen Kühldruck.

Grundsätzlich kann die Vorgabe eines Filters zum Filtern, vorzugsweise wenigstens eines freien Kühlmediumparameters wie dem Masse- und /oder Volumenstrom des Kühlmediums, insbesondere einen intelligenten Filter vorsehen, der externe Störungen erkennt. Insbesondere sind externe Störungen im Rahmen der Weiterbildung durch ein vergleichsweise kurzzeitiges Auftreten gekennzeichnet. Erkennungsparameter des Filters umfassen vorzugsweise eine oder mehrere der Merkmale ausgewählt aus der Gruppe: Gradientenerfassung eines zeitlichen Verlaufs eines freien Kühlmediumparameters, Extremwerterfassung eines zeitlichen Verlaufs eines freien Kühlmediumparameters, zeitliche Begrenztheit eines zeitlichen Verlaufs eines freien Kühlmediumparameters, insbesondere zeitliche Begrenztheit auf weniger als 10 Minuten, vorzugsweise weniger als 5 Minuten, insbesondere weniger als 1 bis 2 Minuten. Grundsätzlich kann ein solcher intelligenter Filter zur Selbsterkennung externer Störungen auch durch andere Maßnahmen ausgebildet sein. Insbesondere kann ein intelligenter Filter unterstützt werden durch eine entsprechende Signalisierung, welche eine externe Störung in die Herstellungsvorrichtung anzeigt.

Während ein Filter grundsätzlich auch für die einstellbaren Kühlmediumparameter oder andere Kühlmediumparameter einsetzbar ist, erweist er sich gleichwohl als besonders vorteilhaft für einen freien, d.h. nicht einstellbaren Kühlmediumparameter erwiesen. Es macht zwar Sinn, mit Einschränkung, auch die einstellbaren Kühlmediumparameter zu filtern, gleichwohl könnte dies die Regeldynamik nachteilig beeinflussen. Dagegen lassen sich externe Störungen besonders gut an freien Kühlmediumparametern, wie einem Masse- und/oder Volumenstrom des Kühlmediums erkennen. Grundsätzlich wäre dies auch möglich anhand eines Einbruchs einer Kühldruckgröße bzw. eines Ansteigens der Kühlleistung erkennbar.

Ein besonders bevorzugter Filter --sei es zum Filtern vor allem der unmittelbaren Auswirkungen im Masse- und/oder Volumenstrom oder für andere freie Kühlmediumparameter oder sei es zum Filtern einer Kühldruckgröße oder Kühlleistungsgröße-- kann beispielsweise als ein laufender Mittelwert ausgeführt sein. Die Intelligenz eines solchen Filters kann sich beispielsweise daraus ergeben, dass zwei oder mehr laufende Mittelwerte vorgesehen sind, deren Drift zueinander verglichen wird. Insbesondere kann ein erster laufender Mittelwert auf vergleichsweise kurzer Zeitskala --z. B. von vielleicht 1 bis 2 Messwerten hintereinander-- und ein zweiter laufender Mittelwert auf vergleichsweise langer Zeitdistanz --z. B. ein laufender Mittelwert von vielleicht Messwerten, die auf einer Zeitspanne von 1 bis 2 Minuten erfasst werden-- bestimmt werden. Die Intelligenz dieses Filters ergibt sich dann daraus, dass die beiden laufenden Mittelwerte --nämlich beispielsweise der kurzzeitige laufende Mittelwert und der langzeitige laufende Mittelwertverglichen werden. Sollte sich im Rahmen einer Drift eine Abweichung oberhalb eines Schwellwertes zwischen dem ersten und zweiten Mitteilwert ergeben, wird auf eine externe Störung in der Sektions-Maschine bzw. in eine Produktionssektion oder einer Glasform erkannt.

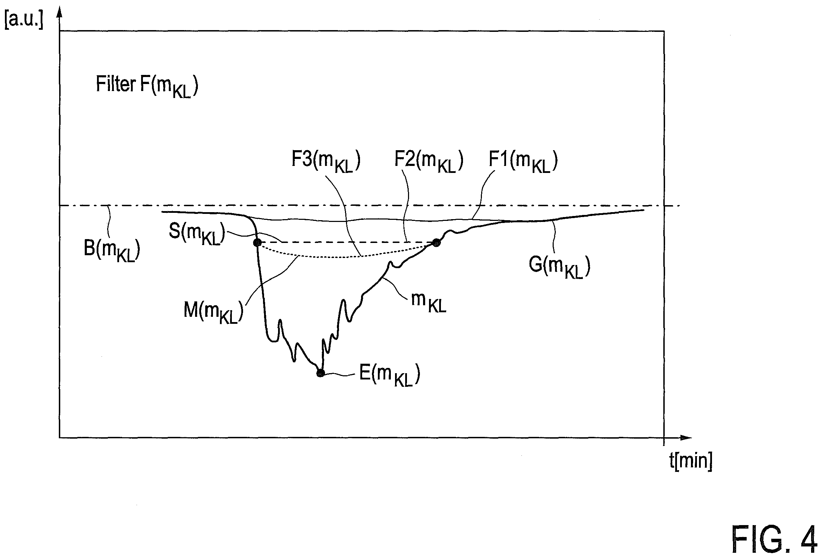

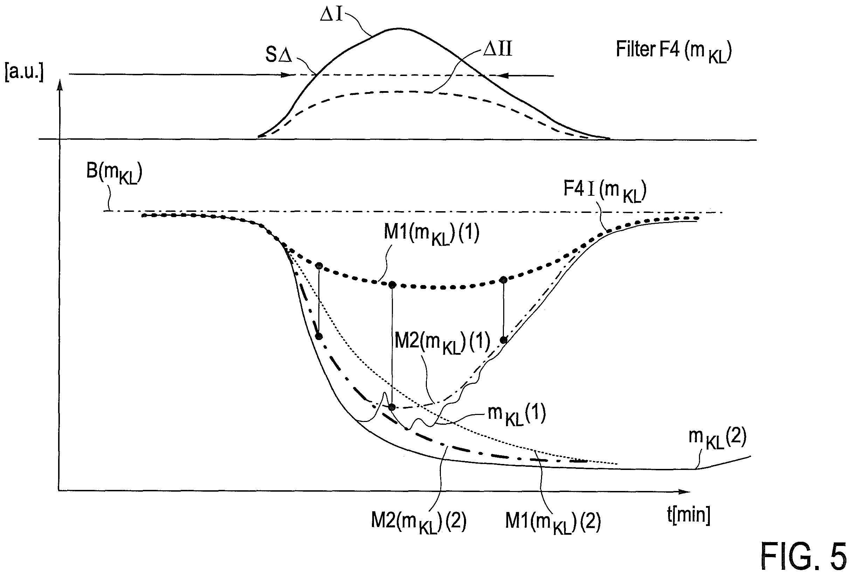

Vorzugsweise kann in dem Fall der Filter vorsehen, dass nicht der laufende Messwert, beispielsweise für den Masse- oder Volumenstrom, für die Regelung verwendet wird, sondern stattdessen der Mittelwert auf der langen Zeitskala oder ein anderer Mittelwert oder eben einfach der Schwellwert, jedenfalls aber nicht die aktuellen Messwerte. So kann verfahren werden, bis die Abweichung der beiden Mittelwerte untereinander wieder unterhalb eines Schwellwerts liegt. Ein Beispiel eines solchen Effekts einer Mittelwertbildung ist mit Hinweis auf FIG.4 und FiG.5 erläutert.

Es hat sich gezeigt, dass die vorliegende Weiterbildung im Rahmen eines Filters vergleichsweise einfach realisierbar ist und zur Lösung der ganz überwiegenden Problemstellung bei einer zentralen Regelung eines für alle Produktionssektionen gemeinsamen Kühlmediums behilflich ist. Die Weiterbildung hat erkannt, dass sich der größte Teil der eingangs angesprochenen Probleme beim Betrieb einer Sektions-Maschine in der Tat durch eine einfache Regelung unter Berücksichtigung der vorgenannten Filter realisieren lässt. Darüber hinaus hat die Weiterbildung zudem erkannt, dass eine insofern zentrale Regelung des Kühlmediums, d. h. gemeinsam für alle Produktionssektionen unter Nutzung der hier sogenannten absoluten Kühlmediumparameter, eine unnötige Komplexität des Gesamtsystems vermeidet. Vielmehr wurde erkannt, dass Lösungen, welche mit vergleichsweise hohem Aufwand auf Einzelregelungen einer Produktionssektion vorsehen, insofern gegenläufig dem eigentlichen Interesse sein können, da dies die Stabilität des Gesamtsystems bzw. die Stabilität des gesamten Regelsystems beeinträchtigen kann. Das Konzept der Erfindung hat somit nicht nur den Vorteil einer gewissen Einfachheit und Robustheit, sondern darüber hinaus auch erhebliche Vorteile in der Qualitätssicherung der hergestellten Glaskörper.

Vorzugsweise sind die primäre Stelleinrichtung für die Kühlleistung und die sekundäre Stelleinrichtung für den Kühldruck kaskadiert. Insbesondere umfassen die primäre Stelleinrichtung eine äußere Steuerung und/oder einen äußeren Regelkreis, der die sekundäre Stelleinrichtung als eine innere Steuerung und/oder ein innerer Regelkreis unterlagert ist. Zusätzlich oder alternativ können die primäre Stelleinrichtung und die sekundäre Stelleinrichtung gekoppelt sein über die Messwerterfassung für wenigstens einen, insbesondere freien, Kühlmediumparameter. Im Rahmen einer besonders bevorzugten Weiterbildung hat sich ein folgendes Regelschema als robust, einfach und qualitätssichernd erwiesen. Vorteilhaft wird eine primäre Stelleinrichtung für die Kühlleistung und eine sekundäre Stelleinrichtung für den Kühldruck kaskadiert angeordnet, wobei die primäre Stelleinrichtung eine äußere Steuerung oder einen äußeren Regelkreis umfasst, in welcher(n) die sekundäre Stelleinrichtung als eine innere Steuerung oder ein innerer Regelkreis unterlagert ist. Eine kaskadierte Stelleinrichtung, insbesondere als Kombination einer äußeren Vorsteuerung und einer inneren Regelung ermöglicht es --in vergleichsweise einfacher Weise für den inneren Regelkreis-- geeignet stabile Rahmen von Werten vorzugeben, innerhalb der eine sehr robuste und schnelle Ausregelung, in diesem Fall der Kühldruckgröße, möglich ist.

Vorzugsweise wird, basierend auf der gewünschten Kühlfähigkeit, insbesondere gewünschten Kühlleistung, als SOLL-Wert des Kühlmediums mittels der primären Stelleinrichtung in Form einer äußeren Regelschleife eine Kühlfähigkeitsgröße, insbesondere Kühlleistungsgröße, als IST-Wert ermittelt und die Kühlfähigkeitsgröße, insbesondere Kühlleistungsgröße, einer sekundären Stelleinrichtung in Form einer inneren Regelschleife als Führungsgröße vorgegeben, und abhängig von der vorgegebenen Kühlfähigkeitsgröße, insbesondere Kühlleistungsgröße, als die Führungsgröße, mittels der sekundären Stelleinrichtung basierend auf dem Kühldruck als IST-Wert des Kühlmediums eine Kühldruckgröße als SOLL-Wert vorgegeben, derart dass sich eine Kühlfähigkeitsgröße, insbesondere Kühlleistungsgröße, als IST-Wert des Kühlmediums der gewünschten Kühlfähigkeitsgröße, insbesondere Kühlleistungsgröße, als SOLL-Wert des Kühlmediums annähert.

Darauf aufbauend hat es sich als vorteilhaft erwiesen, dass basierend auf der gewünschten Kühlleistung als SOLL-Wert des Kühlmediums mittels der primären Stelleinrichtung in Form einer äußeren Regelschleife eine Kühlleistungsgröße als IST-Wert ermittelt wird und eine Kühlleistungsgröße einer sekundären Stelleinrichtung in Form einer inneren Regelschleife als Führungsgröße vorgegeben wird. Insbesondere wird abhängig von der vorgegebenen Kühlleistungsgröße als die Führungsgröße, mittels der sekundären Stelleinrichtung basierend auf dem Kühldruck als IST-Wert des Kühlmediums eine Kühldruckgröße als SOLL-Wert vorgegeben, derart dass sich eine Kühlleistungsgröße als IST-Wert des Kühlmediums der gewünschten Kühlleistungsgröße als SOLL-Wert des Kühlmediums annähert.

Zusätzlich oder alternativ kann die gewünschte Kühlleistung als SOLL-Wert einer primären Stelleinrichtung vorgegeben und der IST-Wert als Kühlleistungsgröße ermittelt werden und eine Abweichung des SOLL-Werts und IST-Werts als vorgegebene Kühlleistungsgröße, nämlich als Führungsgröße, genutzt werden und abhängig von der vorgegebenen Kühlleistungsgröße als Führungsgröße mittels der sekundären Stelleinrichtung die Kühldruckgröße derart eingestellt werden, dass sich die Abweichung verringert.

Vorteilhaft wird ein Kühlmedium den Produktionssektionen zugeführt, dem eine Anzahl von bestimmbaren Kühlmediumparametern zugeordnet sind, nämlich --im Sinne einer Regelung eines für alle Produktionssektionen gemeinsamen Kühlmediums-- vor einer Aufteilung des Kühlmediums auf die Produktionssektionen. Zusätzlich oder alternativ ist der Anzahl von Glasformen zur Kühlung der Anzahl von Glasformen, insbesondere allen Glasformen bzw. Produktionssektionen, ein Kühlmedium zugeführt, und die einstellbaren Kühlmediumparameter sind als absolute Kühlmediumparameter (also für ein allen Produktionssektionen gemeinsam zuführbares Kühlmedium) für eine weitere Anzahl von Produktionssektionen der Sektions-Maschine, insbesondere allen Produktionssektionen gemeinsam geregelt. Insbesondere zusätzlich oder alternativ ist vorgesehen, dass die einstellbaren Kühlmediumparameter eines Kühlmediums für eine einzelne Produktionssektion der zweiten Anzahl nicht mehr individuell geregelt werden. Vielmehr ist es dem Anlagenbetreiber im Rahmen des Konzepts der vorgenannten Weiterbildung überlassen, die einzelnen Produktionssektionen auf Befindlichkeiten des Sektions-Maschine individuell und manuell einzustellen oder einen gewissen Automatismus unter Einstellung von Drosselklappen oder dergleichen Stellelementen vorzusehen. Die vorgenannte erfindungsgemäße Regelungskonzeption kann sich auch auf eine Regelung eines für alle Produktionssektionen gemeinsamen Kühlmediums beziehen, d. h. auf absolute Kühlmediumparameter, d. h. vor einer Aufteilung des Kühlmediums auf die Produktionssektionen.

Die Begrifflichkeit einer Druckgröße umfasst im Rahmen dieser Anmeldung insbesondere eine oder mehrere Größen, welche einen Druck des Kühlmediums hinreichend beschreiben können. Insbesondere sind diese ausgewählt aus der Gruppe bestehend aus: Druck des Kühlmediums, insbesondere Strömungsdruck eines Kühlmediumstroms des Kühlmediums, insbesondere statischer oder dynamischer Druck des Kühlmediums, insbesondere Strömungsdruck eines Kühlmediumstroms des Kühlmediums, das einer zweiten Anzahl von Produktionssektionen der Sektions-Maschine gemeinsam zugeführt wird. Beispielsweise kann ein Druck des Kühlmediums, insbesondere ein Strömungsdruck eines Kühlmediumstroms des Kühlmediums ermittelt werden, vorzugsweise gemessen, simuliert oder berechnet werden.

Im Rahmen dieser Anmeldung umfasst die Kühlleistungsgröße insbesondere eine oder mehrere der Größen, welche in der Lage sind, eine Kühlleistung und/oder eine Kühlkapazität des Kühlmediums zu beschreiben. Insbesondere sind diese ausgewählt aus der Gruppe bestehend aus: Kühlkapazität des Kühlmediums, Kühlleistung des Kühlmediums, insbesondere absolute Kühlkapazität und/oder Kühlleistung des Kühlmediums, das einer zweiten Anzahl von Produktionssektionen der Sektions-Maschine gemeinsam zugeführt wird.

Insbesondere ist im Rahmen einer bevorzugten Weiterbildung die Kühlkapazität oder Kühlleistung des Kühlmediums als eine definierte Kühlleistung oder Kühlkapazität vorgegeben, nämlich als Produkt aus Masse und/oder Volumenstrom des Kühlmediums, Temperatur des Kühlmediums und Kühlmediumfeuchte, insbesondere relative Kühlmediumfeuchte. Grundsätzlich kann eine Kühlleistungsgröße, wie eine Kühlleistung oder Kühlkapazität auch mit zusätzlichen Kühlmediumparametern bestimmt werden, beispielsweise unter Berücksichtigung von Gas oder Flüssigkeitseigenschaften des Kühlmediums, oder anderen Eigenschaften, welche die Kühlfähigkeit des Kühlmediums beeinträchtigen oder verändern. Dazu kann beispielsweise auch die chemische Zusammensetzung des Kühlmediums oder eine elektromagnetische Aufladung des Kühlmediums oder sonstige Formen einer Eigenschaftsveränderung des Kühlmediums gehören.

Die vorgenannten freien Kühlmediumparameter umfassen wenigstens und sind nicht beschränkt auf die folgenden Größen: Masse und/oder Volumenstrom des Kühlmediums, Temperatur des Kühlmediums und Kühlmediumfeuchte, insbesondere relative Kühlmediumfeuchte. Zusätzlich oder alternativ können die freien Kühlmediumparameter am Kühlmedium gemessen werden und/oder als ein Messwert in einem Filter gefiltert werden.

Wie zuvor erläutert kann der Filter ausgebildet sein, eine Unregelmäßigkeit der Kühlleistungsgröße oder einer diese beeinflussenden Größen zu ermitteln. Insbesondere können externe Störungen in einer Sektions-Maschine, insbesondere einer Produktionssektion der Sektions-Maschine vorgenommen werden. Zusätzlich oder alternativ ist der Filter dazu ausgebildet, die Unregelmäßigkeiten in der Kühlleistungsgröße für die vorgegebene Kühlleistungsgröße zu beseitigen. Grundsätzlich ist der Filter ausgebildet, solche Unregelmäßigkeiten in einem freien Kühlmediumparameter auszugleichen.

Eine Weiterbildung sieht insbesondere vor, dass ein ermittelter Wert eines Masse- und/oder Volumenstroms des Kühlmediums zunächst einem erste Wertefilter zugeführt und erst der gefilterte Wert zur Ermittlung einer definierten Kühlleistung oder Kühlkapazität, insbesondere definierten und absoluten Kühlleistung oder Kühlkapazität genutzt wird. Vorzugsweise ist der erste Wertefilter aktiviert für den Fall, dass ein Eingriff in eine Produktionssektion signalisiert oder analysiert wird, die einen Wert eines Masse- und/oder Volumenstroms des Kühlmediums beeinflusst. Vorteilhaft kann auch die Temperatur des Kühlmediums und die Kühlmediumfeuchte zunächst einem zweiten Wertefilter und erst der gefilterte Wert zur Ermittlung einer definierten Kühlleistung oder Kühlkapazität, insbesondere einer definierten und absoluten Kühlleistung oder Kühlkapazität, genutzt werden. Vorzugsweise wird der zweite Wertefilter aktiviert für den Fall, dass ein Eingriff in eine Produktionssektion signalisiert, analysiert oder erkannt wird, die einen Wert einer definierten Kühlleistung oder Kühlkapazität, insbesondere einer definierten und absoluten Kühlleistung oder Kühlkapazität des Kühlmediums beeinflusst.

Im Rahmen einer besonders bevorzugten Weiterbildung ist der erste und/oder zweite Wertefilter und/oder ein Filter für einen sonstigen Messwert oder freien Kühlmediumparameter eine oder mehrere Filtereinheiten umfassend ausgebildet. Die Filtereinheiten sind vorzugsweise ausgewählt aus der Gruppe bestehend aus: Glättung, zeitlicher Hochfrequenzfilter, laufende Mittelwertbildung, Ersetzen von einen schwellwertüberschreitenden Werte durch einen Ersatzwert, insbesondere ein Schwellwert oder einen vorzugsweise laufenden Mittelwert, Ersetzen von überhöhten Werten und/oder von extremen Werten. Insbesondere eignen sich intelligente Filter, die kombiniert sind mit einer Erkennungsanalyse oder Signalisierungseinheit zur Erkennung eines externen Eingriffs und damit einer einhergehenden externen Steuergröße.

Im Rahmen einer besonders bevorzugten weiterbildenden Variante eines Filters kann alternativ oder ergänzend vorgesehen sein, dass der Filter einen modellhaft berechneten und/oder zuvor erfahrungsstatistisch erfassten Zusammenhang zwischen Kühlmitteldruck und Kühlmittelmengenstrom überwacht, und eine Abweichung von diesem funktionellen Zusammenhang über ein vorzugebendes Toleranzband hinaus dazu führt, dass ein Filter einsetzt. Der Filter kann vorzugsweise vorsehen, dass entweder der Messwert des Kühlmittelmengenstrom zeitweilig durch den Langzeitmittelwert desselben ersetzt wird, bis die Abweichung beendet ist, oder er kann beispielsweise vorsehen, dass die automatische Korrektur des Sollwertes Kühlmitteldruck für diese Zeit ausgesetzt wird.

Diese oder eine andere Art eines Filters könnte beispielsweise die Erkennung einer z. B. vom Maschinenfahrer herbeigeführten Querschnittsveränderung des Kühlmittelstromes durch die Maschine betreffen. Eine solche Querschnittsveränderung kann durch Abschalten einer oder mehrerer Sektionen oder durch manuelle Veränderungen in der Maschineneinstellung erfolgt sein. Letzteres verlangt ggf. eine Neufestlegung des Sollwertes des überlagerten Regelkreises Kühlkapazität. Eine solche Sollwertanpassung im Rahmen des Filters kann manuell durch den Anlagenfahrer erfolgen, oder durch die Steuerung selbständig vorgenommen werden.

Eine gemäß der Weiterbildung besonders vorteilhafte Steuerung und/oder Regelung mit dem genannten Filter kann eine Signalausgabe umfassen, die den Anlagenfahrer auf die Veränderung aufmerksam macht. Zusätzlich oder alternativ kann die vorteilhafte Steuerung und/oder Regelung mit dem genannten Filter eine Werteausgabe umfassen, die dem Anlagenfahrer einen neuen Sollwert vorschlägt. Dieser kann beispielsweise bestätigt oder durch eine eigene Eingabe ersetzt werden.

Eine solche Überwachung und Filterung im Rahmen der Steuerung und/oder Regelung wäre auch insoweit vorteilhaft, als eine vom Anlagenfahrer willentlich herbeigeführte Querschnittsveränderung des Kühlmittelstromes durch die Maschine (z. B. Öffnen oder Schließen zur Nachjustierung einer ausgewählten einzelnen Sektion) -gemäß dem Konzept der Erfindung-- ja gerade nicht durch Veränderung des Kühlmittelvordrucks wieder kompensiert werden soll, sondern die Steuerung auf dem so veränderten Niveau der Gesamtkühlung selbständig fortsetzen soll.

Im Normalfall mag ein Anlagenfahrer den bevorzugten übergeordneten Regelkreis betreffend die Kühlkapazität erst dann aktivieren, wenn er die Einstellung der Sektionen abgeschlossen hat. Jedoch berücksichtigt die vorgenannte weiterbildende Variante auch Ausnahmefälle und insofern handelt es sich, um eine entsprechend intelligente Steuerung und/oder Regelung, welche auch für Ausnahmefälle einen qualitativ hochwertigen Anlagenbetrieb garantiert.

Es gibt jedoch im Rahmen einer weiteren besonders bevorzugten weiterbildenden Variante auch die Möglichkeit, statt eines vorgenannten Filters im klassischen Sinne für einen geeigneten Kühlmediumparameter -vor allem für den des Masse- und/oder Volumenstrom--, vor allem diesen Kühlmediumparameter des Masse- und/oder Volumenstroms (Mengenstrom des Kühlmittels) überhaupt unberücksichtigt zu lassen. Alternativ kann dazu eine Steuerung und/oder Regelung vorgesehen werden, die mit einem modellhaft intern zu berechnenden Kühlmittelstrom als Funktion des Kühlmitteldrucks arbeitet. Vorzugsweise ist dann eine Art Modell-Filter vorgesehen, der eine Modellierung des Masse- und/oder Volumenstroms vorsieht, wobei der Verlauf des Volumen und/oder Massestroms der Kühlluft als Funktion des Kühlmitteldrucks der Kühlluft modelliert wird. Das entspricht der Annahme eines festen Strömungswiderstands in der Sektionsmaschine. Die vorgenannte klassische Filterung vor allem dieses Masse- und/oder Volumenstroms (Mengenstrom des Kühlmittels) könnte dann entfallen.

Ausführungsformen der Erfindung werden nun nachfolgend anhand der Zeichnung im Vergleich zum Stand der Technik beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Dies betrifft insbesondere aber nicht ausschließlich die folgenden Aspekte.

So sieht das Konzept der Erfindung wie erläutert vor, dass basierend auf einer gewünschten Kühlfähigkeit, insbesondere gewünschten Kühlleistung, des Kühlmediums mittels einer primären Stelleinrichtung eine Kühlfähigkeitsgröße ermittelt und die Kühlfähigkeitsgröße einer sekundären Stelleinrichtung vorgegeben wird, und abhängig von der vorgegebenen Kühlfähigkeitsgröße mittels der sekundären Stelleinrichtung basierend auf dem Kühldruck des Kühlmediums eine Kühldruckgröße vorgegeben wird, derart dass sich eine Kühlfähigkeit, insbesondere eine Kühlleistung, des Kühlmediums der gewünschten Kühlfähigkeit, insbesondere eine Kühlleistung, des Kühlmediums annähert. Insbesondere umfasst die Kühlfähigkeit eine eine Kühlleistung und/oder eine Kühlkapazität beschreibende Größe.

So kann bevorzugt eine die Kühlfähigkeit beschreibende Größe eine definierte Kühlleistung unter Berücksichtigung eines Masse- und/oder Volumenstroms des Kühlmediums sein; bevorzugt bei einer variablen aber fest vorgegebenen Temperatur des Kühlmediums und/oder einer variablen aber fest vorgegebenen Feuchte des Kühlmediums. Bevorzugt sollen Veränderungen der Kühlmitteleingangstemperatur oder Veränderungen der Kühlmittelfeuchte durch eine veränderte Kühlmittelmenge auszugleichen sein, um den allen Sektionen gemeinsamen Kühlkapazitätsstrom oder dergleichen Kühlfähigkeit konstant aufrecht zu erhalten.

Zusätzlich oder alternativ zu einer solchen bevorzugten Veränderung der Kühlmittelmenge kann als Ziel die bevorzugte Aufrechterhaltung eines vorgegebenen, insbesondere konstanten, Kühlkapazitäts-Stromes oder dergleichen Kühlfähigkeit erreicht werden. Insbesondere ist dies als Option auch im Rahmen der Ausführungsform der Fig.3 erläutert und in den Unteransprüchen 2 , 3 und 4 ausgeführt. Eine die Kühlfähigkeit beschreibende Größe kann insbesondere eine Temperatur des Kühlmediums und/oder eine Feuchte des Kühlmediums sein; dies bei wahlweise variablem aber fest vorgegebenem Masse- und/oder Volumenstrom des Kühlmediums oder unter Berücksichtigung eines Masse- und/oder Volumenstroms des Kühlmediums bzw. in Abhängigkeit von diesem.

Beispielsweise kann eine für alle vorgenannten Varianten eine gezielte Veränderung der Kühlmittel-Temperatur und/oder -Feuchte vorgesehen sein. Dies kann z. B. durch Heizen oder Kühlen des Kühlmittels und/oder durch Mischung mit einem weiteren Medium anderer, höherer oder niedriger Temperatur erfolgen. Dies kann zusätzlich oder alternativ auch durch eine gezielte Veränderung einer Kühlmittelfeuchte, z. B. durch "Befeuchten" oder Trocknen des Kühlmittels erfolgen und/oder durch Mischung mit einem weiteren Kühlmedium anderer, höherer oder niedrigerer, Feuchte erfolgen.

Insbesondere hat es sich als bevorzugt erwiesen, die Einstellung einer Kühlkapazität mittels eines Mischvorgangs von einem oder von mehreren Kühlmitteln zu erreichen. Dies lässt sich anlagentechnisch besonders vorteilhaft umsetzen. Vorzugsweise umfasst dies auch, dass eine die Kühlkapazität beschreibende Größe eine Zusammensetzung des Kühlmediums betrifft. Insbesondere kann ein Dampfanteil oder Inertgasanteil oder dergleichen Anteile von Kühlmitteln unterschiedlicher chemischer Zusammensetzung und Zustandsart variiert werden.

Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte Offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsformen sowie anhand der Zeichnung; diese zeigt in:

FIG.1 eine schematische Darstellung einer Herstellungsvorrichtung in Form einer Sektions-Maschine, hier eine Individual-Sektions-Maschine, zur Herstellung für Glaskörper;

FIG.2 ein grundsätzlicher beispielhafter Verlauf eines Regelungsverfahren zur Kühlung der Anzahl von Glasformen im Rahmen eines Ablaufdiagramms gemäß dem Konzept der Erfindung;

FIG.3 eine Detaildarstellung eines kaskadierten Regelschemas gemäß dem Konzept eines Verfahrens zur Regelung einer Kühlung einer Anzahl von Glasformen;

FIG.4 eine beispielhafte Darstellung der Wirkung eines Filters zur Ermittlung einer vorgegebenen Kühlleistungsgröße in einem Regelschema der FIG.3;

FIG. 5 eine besonders bevorzugte Darstellung einer Wirkung eines Filters nach Maßgabe einer ersten und zweiten laufenden Mittelwertbildung zur Ermittlung einer vorgegebenen Kühlleistungsgröße in einem Regelschema der FIG. 3;

FIG.6 eine Darstellung von grundsätzlich einstellbaren Kühlmediumparametern und Messgrößen an einem nicht zur Erfindung gehörigen Beispiel, bei dem eine Kühldruckgröße konstant gehalten wird im Vergleich zu einem erfindungsgemäßen Beispiel, bei dem die Kühldruckgröße eingestellt wird abhängig von einer vorgegebenen Kühlleistung;

FIG.7 eine beispielhafte Darstellung des erfindungsgemäßen Effekts, bei dem die vorgegebene Kühlleistungsgröße mittels einem Filter ermittelt wird.

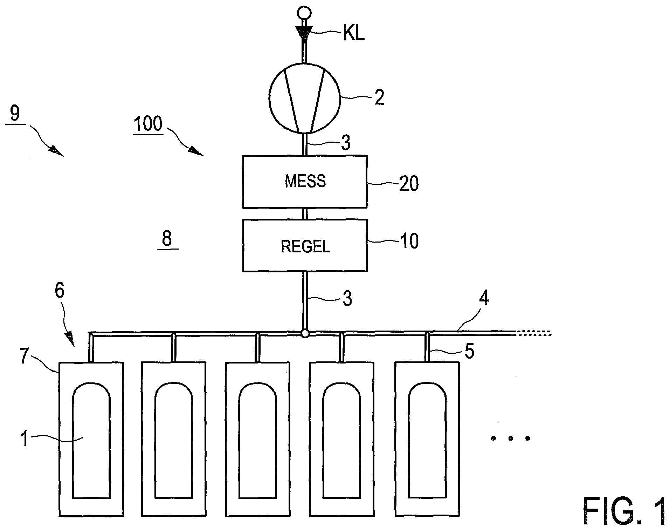

FIG.1 zeigt schematisch den prinzipiellen Aufbau einer an sich bekannten Herstellungsvorrichtung 9 für Glaskörper 1, in diesem Fall für Hohlglaskörper. Die Herstellungsvorrichtung 9 ist hier eine sogenannte Sektions-Maschine, hier in Form einer Individual-Sektions-Maschine (IS), wie sie auf dem Gebiet der Glaskörperherstellung hinlänglich bekannt ist. Grundsätzlich kann die Sektions-Maschine 9 jedoch auch beispielsweise in Form einer Rotationsblasmaschine gebildet sein. Bei einer Individual-Sektions-Maschine sind einzelne Produktionssektionen 6 aneinandergereiht, die unabhängig voneinander mit jeweils einer Glasform 7 zur Herstellung jeweils eines Glaskörpers 1 ausgebildet sind.

Die Sektions-Maschine 9 weist dazu eine zentrale Quelle 2 für Kühlmedium --hier Kühlluft KL-- auf, die beispielsweise in Form eines Gebläses oder dergleichen gebildet sein kann, sowie eine zentrale Kühlluftführung 3, welche an eine Galerie 4, beide als Teile einer gemeinsamen Kühlluftführung, anschließt. Von der Galerie 4 zweigen einzelne Kühlluftleitungen 5 zu den Produktionssektionen 6 ab, welche die Glasformen 7 umfassen. Auf diese Weise kann Kühlluft KL von der zentralen Quelle 2 zunächst im Rahmen einer für alle Produktionssektionen 6 gemeinsamen Kühlluftführung 3, 4 eingestellt werden. Dazu weist die Sektions-Maschine 9 im Rahmen der gemeinsamen Kühlluftführung 3, 4 eine Kühlung 8, eine Mess- und Regeleinrichtung 100 mit einer dieser zugeordneten Regeleinrichtung 10 und einer Messeinrichtung 20 auf.

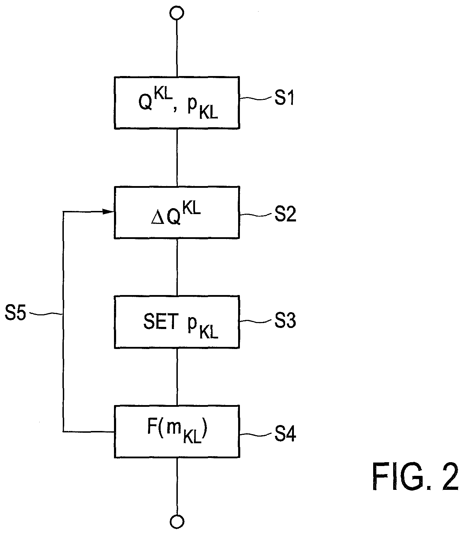

FIG.2 zeigt Verfahrensschritte eines Verfahrens zur Regelung der weiter in FIG.3 erläuterten Kühlung 8 der Sektions-Maschine 9, nämlich zur Kühlung einer Anzahl von Glasformen 7 zur Herstellung der Glaskörper 1 in der Sektions-Maschine 9. Auf die FIG.1, FIG.2 und FIG.3 wird im folgenden zusammen Bezug genommen.

Bei dem Verfahren wird in einem ersten Verfahrensschritt S1 dem in der gemeinsamen Kühlluftführung 3, 4 geführten --das heißt vor einer Aufteilung des Kühlmediums auf die Produktionssektionen 7-- Kühlmedium, hier Kühlluft KL, eine Anzahl von bestimmbaren Kühlmediumparametern zugeordnet. Im Verfahrensschritt S1 sind dazu die einstellbaren Kühlmediumparameter einer Kühlleistung Q-KL und eines Kühldrucks p-KL gezeigt; die Kühlleistung Q-KL wird hier als besonders bevorzugte Möglichkeit einer Kühlfähigkeit des Kühlmediums als Regelparameter herangezogen. Neben den einstellbaren Kühlmediumparametern dienen zur Charakterisierung des Kühlmediums außerdem die, hier messbaren, freien Kühlmediumparameter einer Temperatur T-KL der Kühlluft KL, eine Kühlmediumfeuchte f-KL als relative Kühlmediumfeuchte und ein Masse- und/oder Volumenstrom m-KL der Kühlluft KL - letztere drei gemessen in einer geeigneten in FIG.3 bezeichneten Messvorrichtung MESS. Grundsätzlich können die Werte einer Temperatur T-KL der Kühlluft KL, einer Kühlmediumfeuchte f-KL als relative Kühlmediumfeuchte und eines Masse- und/oder Volumenstroms m-KL der Kühlluft KL jedoch in einer Abwandlung auch aus anderer Quelle, etwa einer Simulation, einer Annahme oder einer externen Informationsquelle bezogen werden.

Im folgenden Fall wird statt Kühlmedium auch der Begriff "Kühlluft" verwendet, da das vorliegend beispielhaft beschriebene Herstellungsverfahren mit Kühlluft KL arbeitet. Gleichwohl sind auch andere Kühlmedien, wie andere Kühlgase, möglich; grundsätzlich ist es auch möglich, ein Kühlmedium in Form eines Dampfes oder einer Flüssigkeit zur Verfügung zu stellen; dies beispielsweise unter Regelung eines Anteils verschiedener Kühlmedien eine Kühlkapazität zu beeinflussen.

In einem zweiten Verfahrensschritt S2 wird, basierend auf der Kühlfähigkeit des Kühlmediums --hier der Kühlleistung Q-KL der Kühlluft KL--, mittels einer anhand von FIG.3 erläuterten primären Stelleinrichtung SE1 eine Kühlleistungsgröße Q-KL-IST ermittelt und einer in FIG.3 näher erläuterten sekundären Stelleinrichtung SE2 vorgegeben. Im vorliegenden Verfahrensschritt S2 wird gemäß FIG.3 eine Differenz ΔQ-KL aus einem jedenfalls annähernd tatsächlichen IST-Wert Q-KL-IST und einem gewünschten SOLL-Wert Q-KL-SOLL der Kühlleistung gebildet und als Führungsgröße --nämlich hier die Differenz ΔQ-KL-- der sekundären Stelleinrichtung SE2 zur Verfügung gestellt.

Im dritten Verfahrensschritt S3 wird dann, abhängig von der vorgegebenen Kühlleistungsgröße --hier die Differenz von SOLL- und IST-Wert der Kühlleistung, d.h. ΔQ-KL-mittels der anhand von FIG.3 näher erläuterten sekundären Stelleinrichtung eine Kühldruckgröße p-KL vorgegeben. Im Verfahrensschritt S3 und in FIG.3 ist dazu eine Setzeinheit SET-p-KL für einen SOLL-Wert der Kühldruckgröße p-KL-SOLL gezeigt.

FIG.3 zeigt an der Stelle der Setzeinheit SET-p-KL auch zusätzlich oder alternativ verfügbare Varianten auf, die genutzt werden können, um abhängig von einer allgemein vorgebbaren Kühlfähigkeitsgröße, eine Kühldruckgröße p-KL vorzugeben. Grundsätzlich kann eine die Kühlfähigkeit beschreibende Größe auch, insbesondere nur, eine Temperatur T-KL des Kühlmediums und/oder, insbesondere nur, eine Kühlmediumfeuchte f-KLwahlweise unter Berücksichtigung eines Masse- und/oder Volumenstroms m-KL des Kühlmediums-- sein. Diese Regelverbindungen zur Setzeinheit SET-p-KL für einen SOLL-Wert der Kühldruckgröße p-KL-SOLL sind in FIG.3 als zusätzliche oder alternative Möglichkeiten einer Regelverbindung per Differenz ΔQ-KL gestrichelt gezeigt.

Wie anhand von FIG.3 weiter erläutert, wird die Kühldruckgröße p-KL weiter durch einen kaskadierten inneren Regelkreis der sekundären Stelleinrichtung SE2 vorgegeben. Das heißt, hier wird die Kühldruckgröße als Ausgangswert eines Reglers REGLER-p-KL und basierend auf dem IST-Wert eines Kühldrucks p-KL und relativ zu dem genannten SOLL-Wert p-KL-SOLL bestimmt. Aufgrund der Führungsgröße ΔQ-KL erfolgt die Bestimmung derart, dass sich eine gewünschte Kühlleistungsgröße Q-KL-SOLL einstellt.

Wie anhand von FIG.3 näher erläutert, ist dazu die primäre als Regelkreis ausgebildete Stelleinrichtung SE1 und die als Regelkreis ausgebildete sekundäre Stelleinrichtung SE2 über entsprechende Messglieder MESS für die freien Kühlmediumparameter Temperatur T-KL und Luftfeuchte f-KL gekoppelt. Steigt die Temperatur T-KL der Kühlluft KL, so wird auch der Druck p-KL für die Kühlluft KL erhöht. Steigt dagegen die Luftfeuchte f-KL der Kühlluft KL, wird der Druck p-KL der Kühlluft KL erniedrigt; diese Wirkungen sind durch entsprechende Pfeilsymbole an den gestrichelten Regelverbindungen zur Setzeinheit SET-p-KL gezeigt. Hintergrund ist, dass bei steigender Temperatur und zunehmender Luftfeuchte die Kühlkapazität bzw. die Kühlleistung Q-KL einer Kühlluftmenge steigt. Um also die Kühlleistung Q-KL bei variierter Temperatur T-KL und Luftfeuchte f-KL der Kühlluft KL anzupassen, wird ein Druck p-KL der Kühlluft KL entsprechend nachgeführt im Rahmen der Nachführung SET-p-KL.

Dies kann sich in bevorzugter Weise bereits aus der Regelverbindung per Differenz ΔQ-KL zur Setzeinheit SET-p-KL erreichen lassen. In einer ersten bevorzugten Variante der Ausführungsform wie sie in FIG.3 gezeigt ist, kann sich der Sollwert p-KL-SOLL lediglich aufgrund der Bestimmung einer definierten Kühlleistungsgröße Q-def ergeben, wie sie unten angegeben ist. In einer solchen besonders bevorzugten ersten Variante gehen Variationen der Temperatur T-KL und Luftfeuchte f-KL des Kühlmediums wie in FIG. 3 angegeben ein.

Grundsätzlich kann in einer zusätzlichen oder alternativen Variante auch vorgesehen sein, dass die Kühlmediumparameter wie Temperatur T-KL der Kühlluft KL und/oder Luftfeuchte f-KL der Kühlluft KL einzeln oder in Kombination berücksichtigt werden, um einen Sollwert p-KL-SOLL zu bestimmen; insbesondere kann die zweite Variante als sehr vereinfachte Ausführungsform genutzt werden, ohne dass die unten genannte definierte Kühlleistungsgröße Q-KL-def bestimmt wird; nämlich insbesondere unter Berücksichtigung nur einer oder beider der gestrichelt gezeigten Regelverbindungen (ohne Berücksichtigung der Regelverbindung per Differenz ΔQ-KL).

In einer dritten Variante kann insbesondere vorgesehen sein, dass beispielsweise der Masse- und Volumenstrom m-KL in Kombination mit der Temperatur T-KL der Kühlluft (beispielsweise als Produkt) --ggfs. ohne weitere Berücksichtigung der Luftfeuchte f-KLzum Bestimmen eines Sollwerts p-KL-SOLL genutzt werden. In einer vierten Variante kann beispielsweise vorgesehen sein, dass nur der Masse- und Volumenstrom m-KL in der FIG. 3 gezeigten Weise als Produkt mit nur der Luftfeuchte f-KL -ggfs. ohne Berücksichtigung der Temperatur T-KL der Kühlluft KL-- genutzt wird, um einen Sollwert p-KL-SOLL zu bestimmen. Die Wahl der Bestimmung für SET-T-KL ist in FIG. 3 mit den drei Regelpfeilen für Q-KL-IST, MESS T-KL und MESS f-KL angegeben, von denen --wie erläutert-- jeder einzeln oder in Kombination von jeweils zwei oder allen drei genutzt werden kann.

Der SOLL-Wert p-KL-SOLL wird dann einem Druckregler REGLER-p-KL zugeführt, welcher in Abhängigkeit eines im Messglied MESS p-KL gemessenen IST-Werts des Kühldrucks p-KL die Kühldruckgröße nachführt.

Der kaskadierte innere Regelkreis der sekundären Stelleinrichtung SE2 kann zum Nachführen des Kühldrucks p-KL der Kühldruckgröße beispielsweise umfassen:

- einen Frequenzumrichter, der die Geschwindigkeit eines Motors eines Kühlluftventilators oder einer Kühlmittelpumpe steuert; oder

- eine Regelklappe im Kühlmittelstrom, beispielsweise eine als "Drallregler" bezeichnete Regelklappe; oder

- eine Kombination aus beiden. Bei einer Kombination kann die Position der Regelklappe so gewählt werden, dass der Frequenzumrichter in einem optimalen Arbeitsbereich steuern kann. Oder es kann der Ausgang des Frequenzumrichters so gewählt werden, dass die Regelklappe in einem optimalen Arbeitsbereich regeln kann.

Als Ergebnis eines solchen Regelprozesses mit einem kaskadierten inneren Regelkreis SE2, welcher einem äußeren Regelkreis SE1 unterlagert ist, wird sich ein bestimmter Volumen- und/oder Massenstrom m-KL der Kühlluft KL einstellen, was vorliegend im Rahmen eines Messmoduls bestimmbar ist.

Die --aufgrund der Eingriffe in die Produktionssektionen 6 der Sektions-Maschine 9-variierten Strömungsschwankungen werden vorteilhaft in der hier beschriebenen Ausführungsform jedoch nicht weiter für den gemessene Massen- und/oder Volumenstrom m-KL der Kühlluft KL verwendet. Die Filterwirkung ist in dem Verfahrensschritt S4 der FIG.2 dargestellt. Die Rückführung des IST-Werts Q-KL-IST ist in der Rückkoppelschleife S5 des Verfahrens in FIG.2 dargestellt. Anschließend schließt sich der äußere Regelkreis im Rahmen der primären Stelleinrichtung SE1 zur Ermittlung einer Kühlleistungsgröße ΔQ-KL.

Schwankungen des Masse- und/oder Volumenstroms m-KL werden einem in FIG.3 dargestellten Filter FILTER F(m-KL) zugeführt, welcher die aufgrund von Eingriffen in die Produktionssektionen 6 auftretenden Schwankungen des Masse- und/oder Volumenstroms m-KL, insbesondere ein Peak-Verhalten desselben, filtert und beseitigt. Beispielshaft sind entsprechende Filter in FIG.4 und FIG.5 dargestellt.

Ein solcher gefilterter Wert F(m-KL) wird dann im Rahmen einer Bestimmungseinheit für einen IST-Wert einer Kühlleistungsgröße Q-KL-IST genutzt; dies entsprechend der in FIG.3 dargestellten Formel

$$Q\text{-def} \sim F_i(m\text{-KL}) \cdot T\text{-KL} \cdot f\text{-KL} \; ; \; i=1,2,3,4$$

d.h. bei Verwendung einer der nachfolgend beschriebenen Filter Fi (i=1..4) für hier die definierte Kühlleistungsgröße Q-def.

FIG.4 zeigt in einem zeitlichen Ausschnitt entlang der Zeitachse t und mit beliebiger Amplitude (a.u.), einen Verlauf eines Masse- oder Volumenstroms m-KL, wie er im Rahmen eines in FIG.3 gezeigten Messmoduls MESS m-KL gemessen wird, nämlich abweichend von einer Basislinie B(m-KL). Der Messwert des Masse- und Volumenstroms m-KL sinkt relativ steil --in der Form eines Peaks in vergleichsweise kurzer Zeit-- deutlich unter die Basislinie B(m-KL) bis auf einen Extremwert E(m-KL) ab und steigt dann wieder bis zur Basislinie B(m-KL) an.

Ein solches Verhalten des Masse- und Volumenstroms m-KL im Rahmen der tatsächlichen Messung ergibt sich beispielsweise aufgrund eines Wechsels der Glasformen 7 unter Unterbrechung des Kühlluftstromes der Kühlluft KL zu einer der Produktionssektionen 6 der Sektions-Maschine 9; die Unterbrechungen spielen sich meist auf relativ kurzer Zeitskala von einigen Minuten im Vergleich zu regulären Schwankungen ab, welche letztere sich --soweit regulär-- eher auf einer Stundenzeitskala über einen Tageszyklus entwickeln. Dies macht sich natürlicherweise als kurzzeitiger Einbruch im gesamten Masse- und Volumenstrom bemerkbar, da die Produktionssektionen 6 der Sektions-Maschine 9 nicht mehr durchströmt wird d.h. ein Einbruch im gemeinsamen Masse- und Volumenstrom m-KL der Kühlluft KL ist relativ klar erkennbar und nach der Erkenntnis einer Weiterbildung der Erfindung nicht dazu angezeigt, ausgeregelt zu werden.

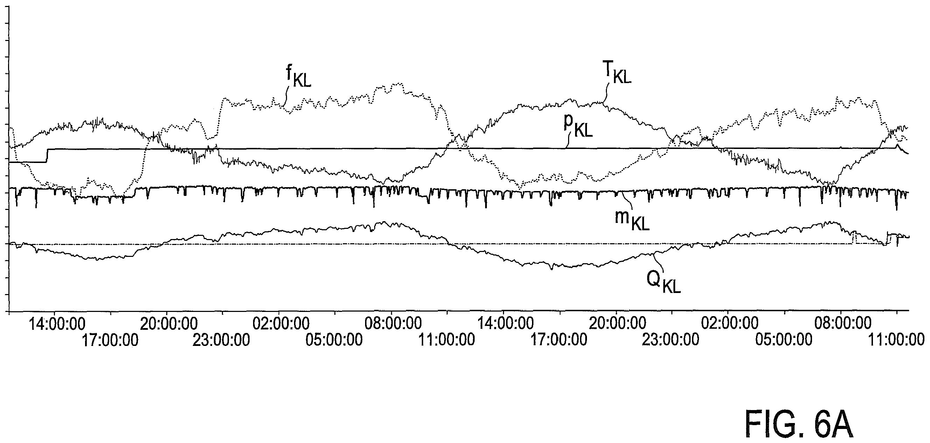

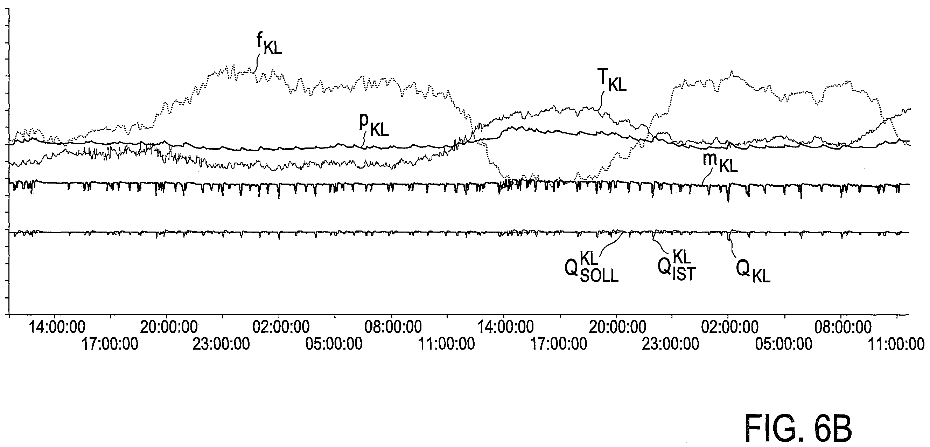

Anders ausgedrückt ist dieses Verhalten vor allem charakteristisch für eine in FIG.6 Ansicht (A) gezeigte und zuvor beschriebene Konstant-Druckregelung. Diese neigt beispielsweise zu einer Aufrechterhaltung eines Druckniveaus; dementsprechend sinkt bei Unterbrechen einer Kühlluftführung an einer Produktionssektion 6 der Sektions-Maschine 9, beispielsweise für einen Glasformenwechsel, ein Masse- und Volumenstroms m-KL der Kühlluft KL in der Produktionssektion 6 der Glasform 7 und steigt beim abgeschlossenen Glasformenwechsel wieder an infolge des wieder frei gegebenen Durchflusses in der Produktionssektion 6 der Glasform 7. Insofern ist eine unterlegte Druckregelung gemäß dem Konzept der Erfindung grundsätzlich jedenfalls durchaus angemessen; aber sie sollte zumindest einer korrekten Führungsgröße im Sinnes des Konzepts der Erfindung folgen.

Das Konzept der Erfindung hat darüberhinaus erkannt, dass es eben nicht primär zweckdienlich ist, mittels der primären Kühlleistungsregelung SE1 mit kaskadiert unterlegter Druckregelung SE2 derartige Ereignisse wie einen plötzlichen Einbruch in der Kühlluft KL auszuregeln. Dies kann lediglich zu Instabilitäten in der Regelungsdynamik beitragen oder gegebenenfalls eine nachschwingende Oszillation des Reglers unterstützen; Ansätze dessen sind in FIG.6 Ansicht (B) erkennbar, da bei dem dort gezeigten hinterlegten Regelablauf ein Gesamtdruck (als absoluter Kühlmediumparameter) angehoben wird sobald ein Einbruch in einem Masse- und Volumenstroms m-KL erkannt wird. Das Konzept der Erfindung schlägt deshalb vor --wie in FIG.4 gezeigt-- die vorgegebene Kühlleistungsgröße ΔQ-KL in korrigierter Form zu ermitteln; nämlich mittels einem Filter F(m-KL), bei dem hier der wenigstens ein freier Kühlmediumparameter --hier nämlich der Masse- und/oder Volumenstrom m-KL der Kühlluft KL-- gefiltert wird zur Beseitigung des Peaks E(m-KL) unterhalb der Basislinie B(m-KL) des Masse- und Volumenstroms m-KL.

Die Wirkung eines stark dämpfenden Frequenzfilters F1 ist in FIG.4 mit durchgezogener Linie gezeigt; erkennbar sind die gefilterten Werte des Masse- und Volumenstroms m-KL nahe an der Basislinie zu B(m-KL).

Möglich ist auch ein Filter F2, welcher das Ersetzen von einem Schwellwert S(m-KL) überschreitende Werte --als gestrichelte Linie in FIG.4-- durch einen Ersatzwert vorsieht; im vorliegenden Fall kennzeichnet die gestrichelte Linie den Schwellwert S(m-KL) als auch den Ersatzwert. Das heißt, der Filter F2 sieht vor, dass bei Abweichungen von der Basislinie B(m-KL) jenseits eines Schwellwerts S(m-KL) genau der Schwellwert S(m-KL) die tatsächlichen Messwerte des Masse- und Volumenstroms m-KL ersetzen soll.

Ein weiterer Filter F3 ist in FIG.4 mit seiner Wirkung als gepunktete Linie eingezeichnet und entspricht der Wirkung einer ständigen laufenden Mittelwertbildung M(m-KL); dies führt bei üblichem Zeitverhalten eines Glasformenwechsels zu einem ausreichend stark gedämpften Werteverlauf.

Außerdem umfassen die Filter F1, F2, F3 der FIG.4 auch eine Glättungsfunktion G(m-KL), so dass sehr hochfrequente zeitliche Dynamiken aus einem Masse- und Volumenstrom m-KL im gefilterten Kühlmedium-Strom F(m-KL) geglättet sind; d.h. ein mit Filter F1, F2, F3 bearbeiteter Masse- und Volumenstroms m-KL verwendet nicht m-KL sondern die Ergebnisse einer Glättungsfunktion G(m-KL), um den Filterwert F(m-KL) zu bestim - men - die geglätteten Werte der Glättungsfunktion G(m-KL) sind in FIG.4 nur symbolisch gezeigt.

FIG. 5 zeigt eine besonders bevorzugte Ausführungsform eines Filters FILTER F4(m-KL); nämlich zur Bearbeitung eines Masse- und Volumenstroms m-KL(1) in einem ersten möglichen zeitlichen Verlauf bzw. eines weiteren Masse- und Volumenstroms m-KL(2) in einem zweiten möglichen zeitlichen Verlauf. Der erste Verlauf eines Masse- und Volumenstroms m-KL(1) entspricht dem Wesen nach einem Verlauf des Masse- und Volumenstroms m-KL, wie er in FIG. 4 gezeigt ist; dieser bildet in etwa ein mögliches Verlaufsergebnis ab, wie es sich bei einem Wechsel einer Produktionssektion 6 einer Sektions-Maschine 9 ergibt. Der weitere Verlauf eines Masse- und Volumenstroms m-KL(2) soll einen nicht von extern herbeigeführten, d. h. normalen oder regulären Verlauf eines Masse- und Volumenstroms m-KL entsprechen.

Der vorteilhafte Filter F4(m-KL) ergibt sich, wie in FIG. 5 dargestellt, als Kombination einer ersten laufenden Mittelwertbildung M1(m-KL) --auf einer eher längeren Zeitskala--; der Masse- und Volumenstrom m-KL ist damit vergleichsweise stark abgeflacht (gepunktete Linie M1(m-KL)(1)) im Vergleich zum tatsächlichen realen Verlauf m-KL(1).

Die zweite laufende Mittelwertbildung M2(m-KL) --auf einer eher kürzeren Zeitskalaentspricht einer kurzzeitigen ständigen laufenden Mittelwertbildung M2(m-KL); demzufolge werden, wie aus FIG.5 ersichtlich, praktisch nur die kurzzeitigen Fluktuationen des Masse- und Volumenstroms m-KL im extremalen Bereich des Einbruchs des Masse- und Volumenstroms m-KL herausgemittelt (strich-punktierte Linie M2(m-KL)(1)).

Im oberen Teil der FIG. 5 ist ein Differenzwertverlauf ΔI(m-KL) als Differenz; d.h. als M2(m-KL(1)) minus M1(m-KL(1)) als durchgezogene Linie gezeigt.

Die Filterwirkung des Filters F4 ergibt sich nun daraus, dass zur weiteren Verwendung im Regelschema nicht der tatsächliche Masse- und Volumenstrom m-KL genutzt wird, sondern derjenige der laufende Mittelwertbildung M1(m-KL) auf langer Zeitskala sobald der Differenzwert ΔI einen Schwellwert SΔ überschreitet. Für das Regelschema kann optional auch anstatt des Masse- und Volumenstroms m-KL(1) derjenige des zweiten kurzzeitigen ständig laufenden Mittelwerts M2(m-KL)(1) verwendet werden, solange der Differenzwert ΔII unterhalb des Schwellwerts SΔ liegt.

Damit ergibt sich für diesen hier in FIG. 5 skizzierten Fall ein Verlauf von F4(m-KL) wie er --mit fett gepunkteter Linie-- im unteren Teil der Fig. 5 dargestellt ist als F4I(m-KL).

Für den zweiten Fall einer tatsächlichen Abnahme des Masse- und Volumenstroms m-KL(2) ist die Filterwirkung FILTER F4 bei gleicher Funktionsweise wie im vorbeschriebenen Fall eine andere; nämlich aufgrund des grundsätzlich anderen unterschiedlichen Verlaufs der ersten und zweiten ständig laufenden Mittelwertbildung M1(m-KL)(2), M2(m-KL)(2) auf eher langer Zeitskala.

Beide ständig laufenden Mittelwertbildung M1(m-KL)(2), M2(m-KL)(2) sind wiederum in FIG.5 eingezeichnet und es ist sofort ersichtlich, dass der Unterschied zwischen der kurzzeitigen und der langzeitigen ständig laufenden Mittelwertbildung M2(m-KL)(2) und M1(m-KL)(2) nicht sonderlich groß ist im Vergleich zu dem zuvor geschilderten Fall.

Dies zeigt sich auch in der Differenzwertbildung für den zweiten Verlauf des Masse- und Volumenstroms m-KL(2), welcher einer tatsächlichen Abnahme eines Masse- und Volumenstroms entspricht. Im oberen Teil der FIG. 5 ist ein Differenzwertverlauf ΔII(m-KL) als Differenz; d.h. als M2(m-KL(2)) minus M1(m-KL(2)) als gestrichelte Linie gezeigt. Der Differenzwert ΔII im oberen Teil der FIG. 5 verläuft wesentlich flacher als der Differenzwert ΔI und kommt nicht mehr an den Schwellwert SΔ heran.

In diesem Fall wird nun darauf entschieden, dass für das Regelschema entweder der Masse- und Volumenstrom m-KL(2) oder derjenige des zweiten kurzzeitigen ständig laufenden Mittelwerts M2(m-KL)(2) verwendet wird, da und solange der Differenzwert ΔII unterhalb des Schwellwerts SΔ liegt. Dieser Verlauf M2(m-KL)(2) ist im unteren Teil der FIG. 5 als strichpunktierter Verlauf gezeigt und entspricht ziemlich gut dem transienten Einbruch des Masse- und Volumenstroms m-KL(2).

Der vorteilhaft gesetzte Filter FILTER F4 ist somit in der Lage, sowohl für den Fall einer tatsächlichen Abnahme eines und Volumenstroms m-KL(2) als auch für einen extern herbeigeführten Einbruch im Falle eines Sektionswechsel festzulegen, dass entweder einer Mittelung auf kurzer Zeitskala des Masse- und Volumenstroms m-KL(2) oder optional dem tatsächlichen Masse- und Volumenstroms m-KL(2) im Regelschema der FIG.3 zu folgen ist oder aber ein kurzzeitiger Einbruch des Masse- und Volumenstroms m-KL(1) mittels einer Mittelung auf langer Zeitskala heraus zu mitteln ist.

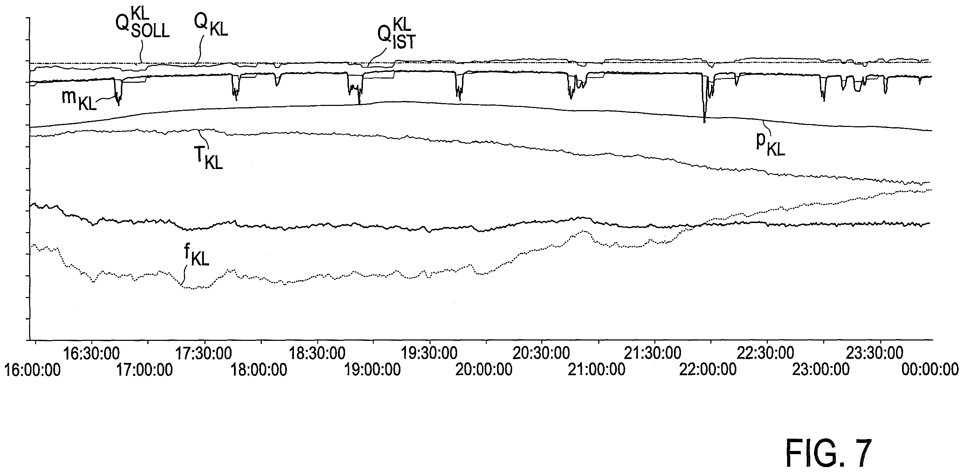

Offensichtlich ist die positive Wirkung eines solchen Ansatzes eines mit Filter F1, F2, F3, F4 bearbeiteten Masse- und Volumenstroms m-KL in dem deutlich ruhigeren bzw. glatteren Verlauf des Kühldrucks p-KL in FIG.7 im Vergleich zu FIG.6 Ansicht (B) zu erkennen.

FIG.6 zeigt durch Vergleich der Ansicht (B) und der Ansicht (A) die positiven Effekte einer zuvor beschriebenen, der Leistungsregelung SE1 kaskadiert unterlagerten Druckregelung SE2 auf; nämlich gemäß dem Konzept der Erfindung im Vergleich zu einer nicht zur Erfindung gehörigen Druckkonstantregelung in Ansicht (A).

Dazu zeigen beide Ansichten (A), (B) der FIG.6 über 24 Stunden zwischen 0:00 h und 24:00 h eines Tages beispielhaft die in den Ansichten gekennzeichneten zeitlichen Verläufe folgender Kühlmediumparameter der Kühlluft KL bei einer zuvor beschriebenen Sektions-Maschine 9: den Verlauf des Drucks p-KL der Kühlluft --in Ansicht A als Konstantdruck vorgegeben, in Ansicht B als unterlagerter kaskadierter Regelkreis nachgeführt--, den Verlauf der Kühlleistung Q-KL der Kühlluft KL --in Ansicht (A) schwankend aufgrund von Luftfeuchte und Temperaturschwankungen, in Ansicht (B) als beispielhafter Konstant-Leistungswert vorgegeben (SOLL-Wert)--, den Verlauf des Volumen und/oder Massestroms m-KL der Kühlluft KL, den Verlauf der Temperatur T-KL der Kühlluft KL und den Verlauf der Luftfeuchte f-KL als relative Luftfeuchte der Kühlluft KL.

In Ansicht (A) ist erkennbar, dass bei hohen Temperaturwerten T-KL der Kühlluft KLbeispielsweise am Nachmittag zwischen 15:00 h und 18:00 h-- die Kühlleistung Q-KL der Kühlluft drastisch unter eine eigentlich konstant zu wünschende Kühlleistung sinkt; dies deshalb, weil im gleichen Zeitraum die Luftfeuchte f-KL abnimmt und den Effekt verstärkt. Im umgekehrten Fall -- im Zeitraum zwischen Mitternacht 24:00 h und morgens 06:00 hkann eine vergleichsweise niedrige Temperatur T-KL der Kühlluft und damit hohe Kühlkapazität mit zudem hoher Luftfeuchte f-KL der Kühlluft-- wird die Kühlluft KL mit vergleichsweise überhöhter Kühlleistung Q-KL geführt. Dieses Verhalten ist plausibel für eine aus dem Stand der Technik vielmals vorgeschlagene Konstantdruckregelung für einen Druck p-KL der Kühlluft. Eine solche Konstantdruckregelung mag zwar hilfreich sein und ggfs. ein störendes Übertragen von Minderungen einer Kühlluftmenge bei einer Produktionssektion auf andere Produktionssektionen einer Sektions-Maschine bei einem Glasformenwechsel oder einem Sektionswechsel unterbinden; es ist jedoch nicht einer Qualität der produzierten Glaskörper 1 zuträglich, da --wie ersichtlich-- für die Kühlleistung Q-KL nur ein zufälliger, jedenfalls aber kein deterministischer, Verlauf erwartet werden kann, da die Kühlleistung Q-KL über 24 Stunden vielmehr den äußeren Umständen folgt.

Die Unregelmäßigkeit in Ansicht (A) der in FIG.6 aufgezeigten Kühlleistung Q-KL ergibt sich auch dann, wenn die Kühlleistung Q-KL in Abhängigkeit einer Glasformentemperatur T-F nachgeführt werden soll. Das Problem ist also in einer Druckregelung vorhanden, wenn eine Änderung von Luftfeuchte und Temperaturschwankungen der Kühlluft nicht kompensiert werden.

Dazu wird gemäß dem Konzept der Erfindung die vorbeschriebene kaskadierte unterlegte -innere-- Druckregelung SE2 nach einer vorgeschalteten --äußeren-- Leistungsregelung SE1 vorgeschlagen. Die Leistungsregelung und der Effekt derselben ist in Ansicht (B) der FIG.6 an einer lediglich beispielhaften Konstantleistungsregelung verdeutlicht; die in Ansicht (B) der FIG.6 erkennbaren positiven Wirkungen ergeben sich auch dann, wenn die Kühlleistung Q-KL in Abhängigkeit einer Formtemperatur T-F geregelt wird, wie dies allgemein anhand von FIG.3 und FIG.2 erläutert ist.

Dementsprechend zeigt FIG.6 in Ansicht (B) bei dem zeitlichen Verlauf der Kühlleistung Q-KL einen SOLL-Wert und einen IST-Wert der Leistung Q-KL-SOLL , Q-KL-IST im Falle einer Konstantregelung. Die Druckwerte p-KL suchen in diesem Fall per unterlagertem, inneren kaskadierten Regelkreis für den Druckverlauf p-KL die Feuchte- und Temperaturschwankungen f-KL, T-KL --wie aus Ansicht (B) der FIG.6 ersichtlich-- auszugleichen. Dies erfolgt indem der Druck erhöht wird bei steigender Temperatur und sinkender Luftfeuchte und der Druck erniedrigt wird bei sinkender Temperatur und steigender Luftfeuchte. Dementsprechend ist anhand von FIG.3 eine Kopplung der Messglieder MESS für T-KL und f-KL für das Setzen der Druckwerte p-KL in SET-p-KL zusätzlich oder alternativ zu $Q_{def}$ vorgesehen.

Allerdings ist in dem Fall zu erwarten, dass sich --wie beschrieben-- die im Masse- und Volumenstrom m-KL erkennbaren Einbrüche nach unten auf andere Produktionssektionen 6 der Sektions-Maschine 9 übertragen; d.h. ein nachgeführter Druckverlauf p-KL sucht ggfs. diese erkennbar mit Druckausschlägen nach oben auszugleichen für eine allen Produktionssektionen 6 gemeinsame Regelung der Kühlluft KL.

Im Ergebnis wird deshalb ein Filter FILTER F(m-KL) --wie anhand von FIG.4 und FIG.5 erläutert-- vorgeschlagen; der Effekt eines solchen Filters ist in FIG.7 auf einer kürzeren Zeitskala eines Verlaufs von p-KL, m-KL, T-KL, f-KL und Q-KL erkennbar. Der Druckverlauf p-KL weist nicht mehr die Nachregel-Artefakte der FIG.6 Ansicht (B) auf. Offensichtlich ist auch die positive Wirkung eines Filters in dem deutlich ruhigeren Verlauf des Kühldrucks p-KL in FIG.7 im Vergleich zu FIG.6 Ansicht (B). Der SOLL- und IST-Wert der Leistungsregelung Q-KL (d.h. Q-KL-IST und Q-KL-SOLL) sind nahezu deckungsgleich.

Damit ist anhand der in FIG.7 aufgezeigten Vorteile erkennbar, dass mit einer Leistungsnachführung (beispielsweise in Abhängigkeit einer Formentemperatur T-F) selbst bei häufigem Formenwechsel (wie anhand des Masse- und Volumenstroms m-KL in FIG.7 erkennbar) eine korrekte Kühlleistungsführung möglich ist, die gleichwohl Störungen im Kühlluftstrom wegfiltert. Im Ergebnis werden zudem Temperatur- und Feuchteschwankungen durch veränderliche Drucksollwerte kompensiert, jedoch die Störungen der Kühlluftströmung werden gemindert; d. h. z. B. gedämpft, geglättet oder ignoriert.

In einem Datensatz von Messgrößen und einstellbaren Kühlmedium-Parametern können unterschiedliche Kühlleistungskategorien als Kühlleistungsgröße vorgegeben werden. So kann im Ergebnis eine Leitsystemoberfläche beispielhaft eine automatische Regelung nach oben beschriebenem Konzept für ein mittleres Luftdruckniveau bei moderater Kühlleistung vorsehen. Es kann auch für ein mittleres bis hohes Luftdruckniveau bei mittlerer und gesteigerter Kühlleistung Q-KL eine manuelle Steuerung vorgesehen sein. Da die entsprechenden Werte einer Luftfeuchte und Lufttemperatur stark unterschiedlich sein können --z. B. abhängig von den klimatischen Bedingungen am Welt-Standort einer Sektions-Maschine; z. B. an einem Standort in Indien (mit regelmäßig höheren Luftfeuchten und Lufttemperaturen) oder an einem Standort in Deutschland (mit regelmäßig moderaten aber stark schwankenden Luftfeuchten und Lufttemperaturen)-- können diese durch eine entsprechende Druckanpassung, nämlich mittels einem höheren SOLL-Wert des Kühlluftdrucks p-KL, ausgeglichen werden.

Es gibt im Rahmen einer weiteren hier nicht gezeigten Ausführungsform die Möglichkeit, statt eines Filters FILTER F(m-KL) der FIG.3 für den des Masse- und/oder Volumenstrom vor allem diesen Masse- und/oder Volumenstroms (Mengenstrom des Kühlmittels) überhaupt unberücksichtigt zu lassen. Es kann dazu eine Steuerung und/oder Regelung vorgesehen werden, die mit einem modellhaft intern zu berechnenden Kühlmittelstrom, d.h. den Verlauf des Volumen und/oder Massestroms m-KL der Kühlluft KL als Funktion des Kühlmitteldrucks p-KL der Kühlluft arbeitet. Das entspricht praktisch der Annahme eines festen Strömungswiderstands in der Sektionsmaschine. Die Filterung FILTER F(m-KL) vor allem dieses Masse- und/oder Volumenstroms (Mengenstrom des Kühlmittels) bzw. auch dessen Messung MESS m-KL könnte dann entfallen, wenn also der Verlauf des Volumen und/oder Massestroms m-KL der Kühlluft KL als Funktion des Kühlmitteldrucks p-KL der Kühlluft modelliert wird. Insofern umfasst das Konzept auch einen Modell-Filter FILTER, welcher eine Modellierung des Masse- und/oder Volumenstroms (Mengenstrom des Kühlmittels) vorsieht.

**Patentansprüche**

1. Verfahren zur Regelung einer Kühlung einer Anzahl von Glasformen mit einem Kühlmedium bei einer Herstellung von Glaskörpern oder Hohl-Glaskörpern, in einer Sektions-Maschine mit einer weiteren Anzahl von Produktionssektionen, wobei einer Produktionssektion der Sektions-Maschine jeweils wenigstens eine der Glasformen zugeordnet ist, und

   - zur Kühlung der Anzahl von Glasformen das Kühlmedium gemeinsam zugeführt wird, wobei die Zuführung des gemeinsamen Kühlmediums für die Anzahl von Glasformen gemeinsam geregelt wird und dem gemeinsamen Kühlmedium eine Anzahl absoluter Kühlmediumparameter zugeordnet wird und die absoluten Kühlmediumparameter als für die Anzahl von Glasformen gemeinsame Kühlmediumparameter bestimmt werden, **dadurch gekennzeichnet, dass**
   - dem Kühlmedium als für die Anzahl von Glasformen gemeinsam einstellbare absolute Kühlmediumparameter wenigstens eine Kühlfähigkeit, nämlich eine Kühlleistung, und ein Kühldruck zugeordnet und eingestellt werden, wobei
   - basierend auf einer gewünschten Kühlfähigkeit, nämlich gewünschten Kühlleistung, des Kühlmediums mittels einer primären Stelleinrichtung eine Kühlfähigkeitsgröße ermittelt und die Kühlfähigkeitsgröße einer sekundären Stelleinrichtung vorgegeben wird,
   - abhängig von der vorgegebenen Kühlfähigkeitsgröße mittels der sekundären Stelleinrichtung basierend auf dem Kühldruck des Kühlmediums eine Kühldruckgröße vorgegeben wird, derart dass sich eine Kühlfähigkeit, nämlich eine Kühlleistung, des Kühlmediums der gewünschten Kühlfähigkeit, nämlich eine Kühlleistung, des Kühlmediums annähert,
   - eine die Kühlfähigkeit beschreibende Größe eine definierte Kühlleistung unter Berücksichtigung eines Masse- und/oder Volumenstroms des Kühlmediums, einer Temperatur des Kühlmediums und einer Feuchte des Kühlmediums ist und/oder
   - eine die Kühlfähigkeit beschreibende Größe eine Temperatur des Kühlmediums und/oder eine Feuchte des Kühlmediums wahlweise unter Berücksichtigung eines Masse- und/oder Volumenstroms des Kühlmediums ist.

2. Verfahren nach Anspruch 1, **dadurch gekennzeichnet, dass** die Kühlfähigkeit eine Kühlleistung und/oder eine Kühlkapazität beschreibende Größe ist.

3. Verfahren nach Anspruch 1 oder 2, **dadurch gekennzeichnet, dass** als Kühlmedium ein Kühlgas, eine Kühlluft, ein Kühldampf oder Kühlwasser oder ein anderes Fluid verwendet wird und/oder die Sektions-Maschine eine Individual-Sektions-Maschine (IS-Maschine) oder Rotations-Sektions-Maschine (Rotationsblasmaschine) ist.

4. Verfahren nach einem der vorhergehenden Ansprüche, **dadurch gekennzeichnet, dass** eine die Kühlkapazität beschreibende Größe eine Zusammensetzung des Kühlmediums ist und/oder ein Dampfanteil ist.

5. Verfahren nach einem der vorhergehenden Ansprüche, **dadurch gekennzeichnet, dass**

   - die primäre Stelleinrichtung eine Steuer- und/oder Regeleinrichtung umfasst mittels der die Kühlfähigkeit, insbesondere eine Kühlleistung, in Abhängigkeit einer Glasform-Temperatur geregelt und/oder gesteuert wird, und/oder
   - im Rahmen einer Vorsteuerung, welcher eine Regelung der Kühlfähigkeit, nämlich Kühlleistung, nachgelagert ist, die Kühlfähigkeit, nämlich Kühlleistung, mit einem variabel vorgebbaren aber festen Wert konstant gesteuert wird.

6. Verfahren nach einem der vorhergehenden Ansprüche, **dadurch gekennzeichnet, dass** dem Kühlmedium für die Anzahl von Glasformen gemeinsam ermittelbare absolute freie Kühlmediumparameter zugeordnet und bestimmt werden und diese mittels einem Filter zum Filtern wenigstens eines der freien Kühlmediumparameter aufbereitet werden, wobei die primäre Stelleinrichtung umfasst: eine Erfassung und einen Filter, für den wenigstens einen freien Kühlmediumparameter, nämlich die primäre Stelleinrichtung eine Messwerterfassung aufweist für wenigstens einen oder mehrere der Kühlmediumparameter ausgewählt aus der Gruppe: Kühlmediumtemperatur, Kühlmediumfeuchte, Masse- und /oder Volumenstrom des Kühlmediums.

7. Verfahren nach einem der vorhergehenden Ansprüche, **dadurch gekennzeichnet, dass** die sekundäre Stelleinrichtung eine Steuer- und/oder Regeleinrichtung umfasst mittels der die Kühldruckgröße in Abhängigkeit der vorgegebenen Kühlfähigkeit, insbesondere Kühlleistung, geregelt und/oder gesteuert wird, wobei
die Kühldruckgröße in Abhängigkeit der vorgegebenen Kühlfähigkeit geregelt und/oder gesteuert wird im Rahmen einer Vorsteuerung, der eine Regelung der Kühldruckgröße nachgelagert ist und die sekundäre Stelleinrichtung eine Messwerterfassung für wenigstens die Kühldruckgröße umfasst.

8. Verfahren nach einem der vorhergehenden Ansprüche, **dadurch gekennzeichnet, dass**

    - die primäre Stelleinrichtung für die Kühlfähigkeit, nämlich Kühlleistung, und die sekundäre Stelleinrichtung für den Kühldruck kaskadiert sind, wobei die primäre Stelleinrichtung eine äußere Steuerung und/oder einen äußeren Regelkreis umfasst, der die sekundäre Stelleinrichtung als eine innere Steuerung und/oder ein innerer Regelkreis unterlagert ist, und/oder
    - die primäre Stelleinrichtung und die sekundäre Stelleinrichtung gekoppelt sind über die Messwerterfassung für wenigstens einen freien, Kühlmediumparameter.

9. Verfahren nach einem der vorhergehenden Ansprüche, **dadurch gekennzeichnet, dass**

    - basierend auf der gewünschten Kühlfähigkeit, nämlich gewünschten Kühlleistung, als SOLL-Wert des Kühlmediums mittels der primären Stelleinrichtung in Form einer äußeren Regelschleife eine Kühlfähigkeitsgröße, nämlich Kühlleistungsgröße, als IST-Wert ermittelt und die Kühlfähigkeitsgröße, nämlich Kühlleistungsgröße, einer sekundären Stelleinrichtung in Form einer inneren Regelschleife als Führungsgröße vorgegeben wird, und
    - abhängig von der vorgegebenen Kühlfähigkeitsgröße, nämlich Kühlleistungsgröße, als die Führungsgröße, mittels der sekundären Stelleinrichtung basierend auf dem Kühldruck als IST-Wert des Kühlmediums eine Kühldruckgröße als SOLL-Wert vorgegeben wird, derart dass sich eine Kühlfähigkeitsgröße, nämlich Kühlleistungsgröße, als IST-Wert des Kühlmediums der gewünschten Kühlfähigkeitsgröße, nämlich Kühlleistungsgröße, als SOLL-Wert des Kühlmediums annähert.

10. Verfahren nach einem der vorhergehenden Ansprüche, **dadurch gekennzeichnet, dass**

    - eine gewünschte Kühlfähigkeit, nämlich Kühlleistung, als SOLL-Wert einer primären Stelleinrichtung vorgegeben und ein IST-Wert als Kühlfähigkeitsgröße, nämlich Kühlleistungsgröße, ermittelt wird und eine Abweichung des SOLL-Werts und IST-Werts als vorgegebene Kühlfähigkeitsgröße, nämlich Kühlleistungsgröße, nämlich als Führungsgröße genutzt wird und
    - abhängig von der vorgegebenen Kühlfähigkeitsgröße, insbesondere Kühlleistungsgröße, als Führungsgröße mittels der sekundären Stelleinrichtung eine Kühldruckgröße derart eingestellt wird, dass sich die Abweichung verringert.

11. Verfahren nach einem der vorhergehenden Ansprüche, **dadurch gekennzeichnet, dass**

    - ein Kühlmedium zugeführt wird, dem die Anzahl von absoluten Kühlmediumparameter zugeordnet sind und die absoluten Kühlmediumparameter für die Anzahl von Glasformen gemeinsam bestimmt werden vor einer Aufteilung des Kühlmediums auf die Produktionssektionen und/oder
    - der Anzahl von Glasformen zur Kühlung derselben, insbesondere allen Glasformen, das Kühlmedium zugeführt wird und die gemeinsam einstellbaren absoluten Kühlmediumparameter für eine weitere Anzahl von Produktionssektionen der Sektions-Maschine, insbesondere allen Produktionssektionen, gemeinsam geregelt wird, und/oder
    - ohne dass die gemeinsam einstellbaren Kühlmediumparameter des Kühlmediums für eine oder mehrere Produktionssektion der weiteren Anzahl individuell geregelt wird.

12. Verfahren nach einem der vorhergehenden Ansprüche, **dadurch gekennzeichnet, dass** die Druckgröße eine oder mehrere der Größen umfasst, die ausgewählt sind aus der Gruppe bestehend aus: Druck des Kühlmediums, insbesondere Strömungsdruck eines Kühlmediumstromes des Kühlmediums, insbesondere Strömungsdruck eines Kühlmediumstromes des Kühlmediums, das einer weiteren Anzahl von Produktionssektionen der Sektions-Maschine gemeinsam zugeführt wird, insbesondere wobei ein Druck des Kühlmediums, insbesondere Strömungsdruck eines Kühlmediumstromes des Kühlmediums ermittelt, insbesondere gemessen wird.

13. Verfahren nach einem der vorhergehenden Ansprüche, **dadurch gekennzeichnet, dass** eine Unregelmäßigkeit eines Kühlmediumparameters und/oder einer Kühlfähigkeitsgröße oder einer diese beeinflussenden Größe ermittelt wird, insbesondere unterschieden wird, ob die Unregelmäßigkeit infolge eines externen Eingriffs an einer der Produktionssektionen der Sektions-Maschine auftritt oder einen anderen Grund hat, und der Filter ausgebildet ist, die Unregelmäßigkeit in dem Kühlmediumparameter und/oder der Kühlfähigkeitsgröße wenigstens zu mindern, wobei
ein ermittelter Wert eines Masse- und/oder Volumenstrom des Kühlmediums zunächst einem ersten Werte-Filter zugeführt und erst der gefilterte Wert zur Ermittlung einer Kühlfähigkeit, insbesondere einer definierten und absoluten Kühlleistung genutzt wird.

14. Verfahren nach einem der vorhergehenden Ansprüche, **dadurch gekennzeichnet, dass** eine Temperatur des Kühlmediums und/oder eine Kühlmediumfeuchte zunächst einem zweiten Werte-Filter zugeführt und erst der gefilterte Wert zur Ermittlung einer definierten und absoluten Kühlleistung genutzt wird, und

    - der erste Werte-Filter aktiviert wird für den Fall, dass ein Eingriff in eine Produktionssektion signalisiert und/oder erkannt wird, die einen Wert eines Masse- und/oder Volumenstrom des Kühlmediums beeinflusst, und/oder
    - der zweite Werte-Filter aktiviert wird für den Fall, dass ein Eingriff in eine Produktionssektion signalisiert und/oder erkannt wird, die einen Wert zur Ermittlung einer absoluten definierten Kühlleistung oder Kühlkapazität des Kühlmediums beeinflusst.

15. Verfahren nach Anspruch 13 oder 14, **dadurch gekennzeichnet, dass** der erste und/oder zweite Werte-Filter und/oder ein Filter für einen sonstigen Messwert eine oder mehrere Filter-Einheiten umfasst, die ausgewählt sind aus der Gruppe bestehend aus: Glättung, zeitlicher Hoch-Frequenzfilter, laufende Mittelwertbildung, erste laufende Mittelwertbildung auf einer ersten Zeitskala und zweite laufende Mittelwertbildung auf einer zweiten Zeitskala, Ersetzen von einen Schwellwert überschreitende Werte durch einen Ersatzwert, insbesondere wobei der Ersatzwert ein Schwellwert oder ein laufender Mittelwert ist, Ersetzen von überhöhten Werten und/oder von Extremwerten.

16. Verfahren nach einem der vorhergehenden Ansprüche, **dadurch gekennzeichnet, dass** ein Modell-Filter eine Modellierung des Masse- und/oder Volumenstroms vorsieht, wobei der Verlauf des Volumen und/oder Massestroms der Kühlluft als Funktion des Kühlmitteldrucks der Kühlluft modelliert wird.

17. Herstellungsverfahren für Glaskörper, oder für Hohl-Glaskörpern, in einer Sektions-Maschine mit einer weiteren Anzahl von Produktionssektionen, wobei einer Produktionssektion der Produktionssektionen der Sektions-Maschine jeweils wenigstens eine Glasform einer Anzahl von Glasformen zugeordnet ist, und eine Kühlung der Anzahl von Glasformen mit einem Kühlmedium geregelt wird, und

    - zur Kühlung der Anzahl von Glasformen das Kühlmedium gemeinsam zugeführt wird, wobei die Zuführung des gemeinsamen Kühlmediums für die Anzahl von Glasformen gemeinsam geregelt wird und dem gemeinsamen Kühlmedium eine Anzahl absoluter Kühlmediumparameter zugeordnet wird und die absoluten Kühlmediumparameter als für die Anzahl von Glasformen gemeinsame Kühlmediumparameter bestimmt werden, **dadurch gekennzeichnet, dass**

    - dem Kühlmedium als für die Anzahl von Glasformen gemeinsam einstellbare absolute Kühlmediumparameter wenigstens eine Kühlfähigkeit, insbesondere eine Kühlleistung, und ein Kühldruck zugeordnet und eingestellt werden, insbesondere gesteuert und/oder geregelt werden, wobei
    - basierend auf einer gewünschten Kühlfähigkeit, insbesondere gewünschten Kühlleistung, des Kühlmediums mittels einer primären Stelleinrichtung eine Kühlfähigkeitsgröße ermittelt und die Kühlfähigkeitsgröße einer sekundären Stelleinrichtung vorgegeben wird,
    - abhängig von der vorgegebenen Kühlfähigkeitsgröße mittels der sekundären Stelleinrichtung basierend auf dem Kühldruck des Kühlmediums eine Kühldruckgröße vorgegeben wird, derart dass sich eine Kühlfähigkeit, insbesondere eine Kühlleistung, des Kühlmediums der gewünschten Kühlfähigkeit, insbesondere eine Kühlleistung, des Kühlmediums annähert,
    - eine die Kühlfähigkeit beschreibende Größe eine definierte Kühlleistung unter Berücksichtigung eines Masse- und/oder Volumenstroms des Kühlmediums, einer Temperatur des Kühlmediums und einer Feuchte des Kühlmediums ist und/oder
    - eine die Kühlfähigkeit beschreibende Größe eine Temperatur des Kühlmediums und/oder eine Feuchte des Kühlmediums wahlweise unter Berücksichtigung eines Masse- und/oder Volumenstroms des Kühlmediums ist.

18. Herstellungsverfahren nach Anspruch 17, **dadurch gekennzeichnet, dass** als Kühlmedium ein Kühlgas, eine Kühlluft, ein Kühldampf oder Kühlwasser oder ein anderes Fluid verwendet wird und/oder die Sektions-Maschine eine Individual-Sektions-Maschine (IS-Maschine) oder Rotations-Sektions-Maschine (Rotationsblasmaschine) ist.

19. Steuer- und/oder Regel-Einrichtung zur Regelung einer Kühlung einer Anzahl von Glasformen mit einem Kühlmedium bei einer Herstellung von Glaskörpern, insbesondere von Hohl-Glaskörpern, in einer Sektions-Maschine mit einer weiteren Anzahl von Produktionssektionen, wobei einer Produktionssektion der Sektions-Maschine jeweils wenigstens eine der Glasformen zugeordnet ist, und

- zur Kühlung der Anzahl von Glasformen das Kühlmedium gemeinsam zugeführt wird, wobei die Zuführung des gemeinsamen Kühlmediums für die Anzahl von Glasformen gemeinsam geregelt wird und dem gemeinsamen Kühlmedium eine Anzahl absoluter Kühlmediumparameter zugeordnet wird und die absoluten Kühlmediumparameter als für die Anzahl von Glasformen gemeinsame Kühlmediumparameter bestimmt werden, **dadurch gekennzeichnet, dass**

- dem Kühlmedium als für die Anzahl von Glasformen gemeinsam einstellbare absolute Kühlmediumparameter wenigstens eine Kühlfähigkeit, insbesondere eine Kühlleistung, und ein Kühldruck zugeordnet und einstellbar ist, insbesondere gesteuert und/oder geregelt ist, wobei

- basierend auf einer gewünschten Kühlfähigkeit, insbesondere gewünschten Kühlleistung, des Kühlmediums mittels einer primären Stelleinrichtung eine Kühlfähigkeitsgröße ermittelbar und die Kühlfähigkeitsgröße einer sekundären Stelleinrichtung vorgebbar ist,

- abhängig von der vorgegebenen Kühlfähigkeitsgröße mittels der sekundären Stelleinrichtung basierend auf dem Kühldruck des Kühlmediums eine Kühldruckgröße vorgebbar ist, derart dass sich eine Kühlfähigkeit, insbesondere eine Kühlleistung, des Kühlmediums der gewünschten Kühlfähigkeit, insbesondere eine Kühlleistung, des Kühlmediums annähert,

- eine die Kühlfähigkeit beschreibende Größe eine definierte Kühlleistung unter Berücksichtigung eines Masse- und/oder Volumenstroms des Kühlmediums, einer Temperatur des Kühlmediums und einer Feuchte des Kühlmediums ist und/oder

- eine die Kühlfähigkeit beschreibende Größe eine Temperatur des Kühlmediums und/oder eine Feuchte des Kühlmediums wahlweise unter Berücksichtigung eines Masse- und/oder Volumenstroms des Kühlmediums ist.

20. Herstellungsvorrichtung für Glaskörper oder für Hohl-Glaskörpern, mit einer Sektions-Maschine mit einer weiteren Anzahl von Produktionssektionen, wobei einer Produktionssektion der Produktionssektionen der Sektions-Maschine jeweils wenigstens eine Glasform einer Anzahl von Glasformen zugeordnet ist und

- zur Kühlung der Anzahl von Glasformen mit einem Kühlmedium bei einer Herstellung von Glaskörpern ein für die Anzahl von Glasformen gemeinsames Kühlmedium den Glasformen zugeführt wird, wobei die Zuführung des gemeinsamen Kühlmediums für die Anzahl von Glasformen gemeinsam geregelt wird und dem gemeinsamen Kühlmedium eine Anzahl absoluter Kühlmediumparameter zugeordnet wird und die absoluten Kühlmediumparameter als für die Anzahl von Glasformen gemeinsame Kühlmediumparameter bestimmt werden mit einer Steuer- und/oder Regel-Einrichtung nach Anspruch 19, **dadurch gekennzeichnet, dass** zur Regelung einer Kühlung der Anzahl von Glasformen bei der Herstellung von Glaskörpern:

- dem Kühlmedium als für die Anzahl von Glasformen gemeinsam einstellbare absolute Kühlmediumparameter wenigstens eine Kühlfähigkeit, insbesondere eine Kühlleistung, und ein Kühldruck zugeordnet und einstellbar ist, insbesondere gesteuert und/oder geregelt ist, wobei

- basierend auf einer gewünschten Kühlfähigkeit, insbesondere gewünschten Kühlleistung, des Kühlmediums mittels einer primären Stelleinrichtung eine Kühlfähigkeitsgröße ermittelbar und die Kühlfähigkeitsgröße einer sekundären Stelleinrichtung vorgebbar ist,

- abhängig von der vorgegebenen Kühlfähigkeitsgröße mittels der sekundären Stelleinrichtung basierend auf dem Kühldruck des Kühlmediums eine Kühldruckgröße vorgebbar ist, derart dass sich eine Kühlfähigkeit, insbesondere eine Kühlleistung, des Kühlmediums der gewünschten Kühlfähigkeit, insbesondere eine Kühlleistung, des Kühlmediums annähert,

- eine die Kühlfähigkeit beschreibende Größe eine definierte Kühlleistung unter Berücksichtigung eines Masse- und/oder Volumenstroms des Kühlmediums, einer Temperatur des Kühlmediums und einer Feuchte des Kühlmediums ist und/oder

- eine die Kühlfähigkeit beschreibende Größe eine Temperatur des Kühlmediums und/oder eine Feuchte des Kühlmediums wahlweise unter Berücksichtigung eines Masse- und/oder Volumenstroms des Kühlmediums ist.

21. Herstellungsvorrichtung nach Anspruch 20, **dadurch gekennzeichnet, dass** als Kühlmedium ein Kühlgas, insbesondere eine Kühlluft, verwendet wird und/oder die Sektions-Maschine eine Individual-Sektions-Maschine (IS-Maschine) oder Rotations-Sektions-Maschine (Rotationsblasmaschine) ist.

## Claims

1. Method for controlling a process of cooling a number of glass moulds with a cooling medium during the production of glass bodies or hollow glass bodies, in a section machine with a further number of production sections, wherein a production section of the section machine is respectively assigned at least one of the glass moulds, and

- for cooling the number of glass moulds, the cooling medium is supplied jointly, wherein the supplying of the shared cooling medium for the number of glass moulds is jointly controlled and the shared cooling medium is assigned a number of absolute cooling medium parameters and the absolute cooling medium parameters are determined as cooling medium parameters that are shared by the number of glass moulds, **characterised in that**

- for the cooling medium is assigned and set as absolute cooling medium parameters that can be set jointly for the number of glass moulds at least one cooling capability, specifically a cooling output, and a cooling pressure, wherein

- on the basis of a desired cooling capability, specifically desired cooling output, of the cooling medium, a cooling capability variable is determined by a primary actuating device, and the cooling capability variable is prescribed to a secondary actuating device,

- depending on the prescribed cooling capability variable, a cooling pressure variable is prescribed by the secondary actuating device on the basis of the cooling pressure of the cooling medium in such a way that a cooling capability, specifically a cooling output, of the cooling medium is made to approximate to the desired cooling capability, specifically a cooling output, of the cooling medium,

- a variable describing the cooling capability is a defined cooling output taking into account a mass and/or volume flow of the cooling medium, a temperature of the cooling medium and a humidity of the cooling medium and/or

- a variable describing the cooling capability is a temperature of the cooling medium and/or a humidity of the cooling medium, optionally taking into account a mass and/or volume flow of the cooling medium.

2. Method according to claim 1, **characterised in that** the cooling capability is a variable describing a cooling output and/or a cooling capacity.

3. Method according to claim 1 or 2, **characterised in that** a cooling gas, a cooling air, a cooling vapour or cooling water or some other fluid is used as a cooling medium and/or the section machine is an individual section machine (IS machine) or a rotary section machine (rotary blowing machine).

4. Method according to any of the preceding claims, **characterised in that** a variable describing the cooling capacity is a composition of the cooling medium and/or a vapour fraction.

5. Method according to any of the preceding claims, **characterised in that**

- the primary actuating device comprises an open-loop and/or closed-loop control device by which the cooling capability, specifically the cooling output, is controlled in a closed-loop and/or open-loop manner depending on a glass mould temperature, and/or

- as part of a pre-control with downstream closed-loop control of the cooling capability, specifically cooling output, the cooling capability, specifically cooling output, is controlled constantly with a value that can be variably prescribed but is fixed.

6. Method according to any of the preceding claims, **characterised in that** for the cooling medium is assigned and specified absolute free cooling medium parameters that can be determined jointly for the number of glass moulds, and said free cooling medium parameters are pre-processed by a filter for filtering at least one of the free cooling medium parameters, wherein

the primary actuating device comprises: an acquisition and a filter, for the at least one free cooling medium parameter, namely the primary actuating device has a measured value acquisition for at least one or more of the cooling medium parameters selected from the group: cooling medium temperature, cooling medium humidity, mass and/or volume flow of the cooling medium.

7. Method according to any of the preceding claims, **characterised in that** the secondary actuating device comprises an open-loop and/or closed-loop control device by which the cooling pressure variable is controlled in a closed-loop and/or open-loop manner depending on the prescribed cooling capability, specifically cooling output, wherein

the cooling pressure variable is controlled in a closed-loop and/or open-loop manner depending on the prescribed cooling capability as part of a pre-control with downstream closed-loop control of the cooling pressure variable and the secondary actuating device comprises a measured value acquisition for at least the cooling pressure variable.

8. Method according to any of the preceding claims, **characterised in that**

- the primary actuating device for the cooling capability, specifically cooling output, and the secondary actuating device for the cooling pressure are cascaded, wherein the primary actuating device comprises an outer open-loop control and/or an outer control loop, which is subordinate to the secondary actuating device as an inner open-loop control and/or an inner control loop, and/or
- the primary actuating device and the secondary actuating device are coupled by way of the measured value acquisition for at least one free cooling medium parameter.

9. Method according to any of the preceding claims, **characterised in that**

- on the basis of the desired cooling capability, specifically desired cooling output, as a SETPOINT value of the cooling medium, a cooling capability variable, specifically cooling output variable, is determined as an ACTUAL value by the primary actuating device in the form of an outer control loop and the cooling capability variable, specifically cooling output variable, is prescribed as a reference variable to a secondary actuating device in the form of an inner control loop, and,
- depending on the prescribed cooling capability variable, specifically cooling output variable, as the reference variable, a cooling pressure variable is prescribed as a SETPOINT value by the secondary actuating device on the basis of the cooling pressure as ACTUAL value of the cooling medium in such a way that a cooling capability variable, specifically cooling output variable, as an ACTUAL value of the cooling medium is made to approximate the desired cooling capability variable, specifically cooling output variable, as a SETPOINT value of the cooling medium.

10. Method according to any of the preceding claims, **characterised in that**

- a desired cooling capability, specifically cooling output, is prescribed as a SETPOINT value to a primary actuating device and an ACTUAL value is determined as a cooling capability variable, specifically cooling output variable, and a deviation of the SETPOINT value and ACTUAL value is used as a prescribed cooling capability variable, specifically cooling output variable, to be specific as a reference variable, and
- depending on the prescribed cooling capability variable, specifically the cooling output variable, as a reference variable, a cooling pressure variable is set by the secondary actuating device in such a way that the deviation is reduced.

11. Method according to any of the preceding claims, **characterised in that**

- a cooling medium is supplied to which the number of absolute cooling medium parameters are assigned and the absolute cooling medium parameters for the number of glass moulds are determined jointly before the cooling medium is divided among the production sections and/or
- for cooling the number of glass moulds, in particular all glass moulds, the cooling medium is supplied to the latter, and the jointly settable absolute cooling medium parameters are jointly controlled for a further number of production sections of the section machine and/or
- without the jointly settable cooling medium parameters of the cooling medium being controlled individually for one or more production sections of the further number.

12. Method according to any of the preceding claims, **characterised in that** the pressure variable comprises one or more of the variables that are selected from the group consisting of: pressure of the cooling medium, specifically flow pressure of a cooling medium stream of the cooling medium, specifically flow pressure of a cooling medium stream of the cooling medium that is supplied jointly to a further number of production sections of the section machine, specifically wherein a pressure of the cooling medium, specifically flow pressure of a cooling medium stream of the cooling medium, is determined, specifically measured.

13. Method according to any of the preceding claims, **characterised in that** an irregularity of a cooling medium parameter and/or of a cooling capability variable or of one of the variables influencing the latter is determined, further comprising determining whether the irregularity is occurring as a result of an external intervention at one of the production sections of the section machine or for some other reason, and the filter is designed at least to reduce the irregularity in the cooling medium parameter and/or the cooling capability variable, wherein
a determined value of a mass and/or volume flow of the cooling medium is initially fed to a first value filter and only the filtered value is used for determining a cooling capability, specifically a defined and absolute cooling output.

14. Method according to any of the preceding claims, **characterised in that** a temperature of the cooling medium and/or a cooling medium humidity is initially fed to a second value filter and only the filtered value is used for determining a defined and absolute cooling output, and

- the first value filter is activated for the case where an intervention in a production section that influences a value of a mass and/or volume flow of the cooling medium is signalled and/or detected, and/or
- the second value filter is activated for the case where an intervention in a production section that influences a value for determining an absolute defined cooling output or cooling capacity of the cooling medium is signalled and/or detected.

15. Method according to claim 13 or 14, **characterised in that** the first and/or second value filter and/or a filter for some other measured value comprises one or more filter units selected from the group consisting of: smoothing, a time-based high-frequency filter, running averaging, first running averaging on a first timescale and second running averaging on a second timescale, replacing values exceeding a threshold value with a substitute value, in particular wherein the substitute value is a threshold value or a running average, replacing excessive values and/or extreme values.

16. Method according to any of the preceding claims, **characterised in that** a model filter provides a modelling of the mass and/or volume flow, wherein the variation of the volume and/or mass flow of the cooling air is modelled as a function of the coolant pressure of the cooling air.

17. Method of production for glass bodies, or for hollow glass bodies, in a section machine with a further number of production sections, wherein a production section of the production sections of the section machine is respectively assigned at least one glass mould of a number of glass moulds, and a cooling of the number of glass moulds with a cooling medium is controlled, and

   - for cooling the number of glass moulds, the cooling medium is supplied jointly, wherein the supplying of the shared cooling medium for the number of glass moulds is jointly controlled and the shared cooling medium is assigned a number of absolute cooling medium parameters and the absolute cooling medium parameters are determined as cooling medium parameters that are shared by the number of glass moulds, **characterised in that**
   - for the cooling medium is assigned and set, specifically subjected to closed-loop and/or open-loop control, as absolute cooling medium parameters that can be set jointly for the number of glass moulds at least one cooling capability, specifically a cooling output, and a cooling pressure, wherein
   - on the basis of a desired cooling capability, specifically a desired cooling output, of the cooling medium, a cooling capability variable is determined by a primary actuating device, and the cooling capability variable is prescribed to a secondary actuating device,

   - depending on the prescribed cooling capability variable, a cooling pressure variable is prescribed by the secondary actuating device on the basis of the cooling pressure of the cooling medium in such a way that a cooling capability, specifically a cooling output, of the cooling medium is made to approximate the desired cooling capability, specifically a cooling output, of the cooling medium,
   - a variable describing the cooling capability is a defined cooling output taking into account a mass and/or volume flow of the cooling medium, a temperature of the cooling medium and a humidity of the cooling medium and/or
   - a variable describing the cooling capability is a temperature of the cooling medium and/or a humidity of the cooling medium, optionally taking into account a mass and/or volume flow of the cooling medium.

18. Method of production according to claim 17, **characterised in that** a cooling gas, a cooling air, a cooling vapour or cooling water or some other fluid is used as a cooling medium and/or the section machine is an individual section machine (IS machine) or a rotary section machine (rotary blowing machine).

19. Open-loop and/or closed-loop control device for controlling a process of cooling a number of glass moulds with a cooling medium during a production of glass bodies, in particular hollow glass bodies, in a section machine with a further number of production sections, wherein a production section of the section machine is respectively assigned at least one of the glass moulds, and

   - for cooling the number of glass moulds, the cooling medium is supplied on a shared basis, wherein the supplying of the shared cooling medium for the number of glass moulds is jointly controlled and the shared cooling medium is assigned a number of absolute cooling medium parameters and the absolute cooling medium parameters are determined as cooling medium parameters that are shared by the number of glass moulds **characterised in that**
   - for the cooling medium is assigned and can be set, specifically subjected to closed-loop and/or open-loop control, as absolute cooling medium parameters that can be set jointly for the number of glass moulds at least one cooling capability, specifically a cooling output, and a cooling pressure, wherein
   - on the basis of a desired cooling capability, specifically a desired cooling output, of the cooling medium, a cooling capability variable can be determined by a primary actuating device, and the cooling capability variable can be prescribed to a secondary actuating device,
- depending on the prescribed cooling capability variable, a cooling pressure variable can be prescribed by the secondary actuating device on the basis of the cooling pressure of the cooling medium in such a way that a cooling capability, specifically a cooling output, of the cooling medium is made to approximate the desired cooling capability, specifically a cooling output, of the cooling medium,
- a variable describing the cooling capability is a defined cooling output taking into account a mass and/or volume flow of the cooling medium, a temperature of the cooling medium and a humidity of the cooling medium and/or
- a variable describing the cooling capability is a temperature of the cooling medium and/or a humidity of the cooling medium, optionally taking into account a mass and/or volume flow of the cooling medium.

20. Production device for glass bodies or for hollow glass bodies, with a section machine having a further number of production sections, wherein a production section of the production sections of the section machine is respectively assigned at least one glass mould of a number of glass moulds, and

- for cooling the number of glass moulds with a cooling medium during a production of glass bodies, a cooling medium shared by the number of glass moulds is supplied to the glass moulds, wherein the supply of the shared cooling medium for the number of glass moulds is jointly controlled and the shared cooling medium is assigned a number of absolute cooling medium parameters and the absolute cooling medium parameters are determined as cooling medium parameters that are shared by the number of glass moulds with an open-loop and/or closed-loop control device according to claim 19, **characterised in that** for controlling a process of cooling the number of glass moulds during the production of glass bodies:
- for the cooling medium is assigned and can be set, specifically subjected to closed-loop and/or open-loop control, as absolute cooling medium parameters that can be set jointly for the number of glass moulds at least one cooling capability, specifically a cooling output, and a cooling pressure, wherein
- on the basis of a desired cooling capability, specifically desired cooling output, of the cooling medium, a cooling capability variable can be determined by a primary actuating device, and the cooling capability variable can be prescribed to a secondary actuating device,

- depending on the prescribed cooling capability variable, a cooling pressure variable can be prescribed by the secondary actuating device on the basis of the cooling pressure of the cooling medium in such a way that a cooling capability, specifically a cooling output, of the cooling medium is made to approximate to the desired cooling capability, specifically a cooling output, of the cooling medium,
- a variable describing the cooling capability is a defined cooling output taking into account a mass and/or volume flow of the cooling medium, a temperature of the cooling medium and a humidity of the cooling medium and/or
- a variable describing the cooling capability is a temperature of the cooling medium and/or a humidity of the cooling medium, optionally taking into account a mass and/or volume flow of the cooling medium.

21. Production device according to claim 20, **characterised in that** a cooling gas, in particular a cooling air, is used as the cooling medium, and/or the section machine is an individual section machine (IS machine) or a rotary section machine (rotary blowing machine).

**Revendications**

1. Procédé de régulation d'un refroidissement d'une pluralité de moules à verre avec un fluide de refroidissement lors d'une fabrication de corps en verre ou de corps en verre creux, dans une machine à sections avec une autre pluralité de sections de production, au moins un des moules à verre correspondant à une section de production de la machine à sections et

- pour le refroidissement de la pluralité de moules à verre, le fluide de refroidissement étant introduit en commun, l'introduction du fluide de refroidissement commun étant régulée de manière commune et au fluide de refroidissement commun correspond une pluralité de paramètres de fluide de refroidissement absolus et les paramètres de fluide de refroidissement absolus sont déterminés en tant que paramètres de fluide de refroidissement communs pour la pluralité de moules à verre, **caractérisé en ce que**
- pour le fluide de refroidissement, en tant que paramètres de fluide de refroidissement absolus réglables en commun pour la pluralité de moules à verre, correspondent et sont réglés une capacité de refroidissement, notamment une puissance de refroidissement et une pression de refroidissement,
- sur la base d'une capacité de refroidissement souhaitée, notamment une puissance de refroidissement souhaitée, du fluide de refroidissement, une grandeur de capacité de refroidissement est déterminée au moyen d'un dispositif de réglage primaire et la grandeur de capacité de refroidissement est prédéterminée dans un dispositif de réglage secondaire,

- en fonction de la grandeur de capacité de refroidissement prédéterminée, au moyen du dispositif de réglage secondaire, sur la base de la pression de refroidissement du fluide de refroidissement, notamment une puissance de refroidissement, du fluide de refroidissement, une grandeur de pression de refroidissement est prédéterminée, de façon à ce qu'une capacité de refroidissement, notamment une puissance de refroidissement, du fluide de refroidissement, s'approche de la capacité de refroidissement souhaitée, notamment une puissance de refroidissement, du fluide de refroidissement,

- une grandeur décrivant la capacité de refroidissement étant une puissance de refroidissement définie en tenant compte d'un débit massique et/ou volumique du fluide de refroidissement, d'une température du fluide de refroidissement et d'une humidité du fluide de refroidissement et/ou

- une grandeur décrivant la capacité de refroidissement étant une température du fluide de refroidissement et/ou une humidité du fluide de refroidissement au choix en tenant compte d'un débit massique et/ou volumique du fluide de refroidissement.

2. Procédé selon la revendication 1, **caractérisé en ce que** la capacité de refroidissement est une grandeur décrivant une puissance de refroidissement et/ou une capacité de refroidissement.

3. Procédé selon la revendication 1 ou 2, **caractérisé en ce que** le fluide de refroidissement utilisé est un gaz de refroidissement, un air de refroidissement, une vapeur de refroidissement ou une eau de refroidissement ou un autre fluide et/ou la machine à sections est une machine à sections individuelles (machine IS) ou machine à sections rotatives (machine à soufflage rotatif).

4. Procédé selon l'une des revendications précédentes, **caractérisé en ce qu'**une grandeur décrivant la capacité de refroidissement est une composition du fluide de refroidissement et/ou une part de vapeur.

5. Procédé selon l'une des revendications précédentes, **caractérisé en ce que**

   - le dispositif de réglage primaire comprend un dispositif de commande et/ou de régulation au moyen duquel la capacité de refroidissement, notamment une puissance de refroidissement, est régulée et/ou contrôlée en fonction d'une température du moule à verre et/ou
- dans le cadre d'un pilotage, placé en aval d'une régulation de la capacité de refroidissement, notamment de la puissance de refroidissement, la capacité de refroidissement, notamment la puissance de refroidissement, est contrôlée de manière constante avec une valeur pouvant être prédéterminée de manière variable mais fixe.

6. Procédé selon l'une des revendications précédentes, **caractérisé en ce que**, au fluide de refroidissement pour la pluralité de moules à verre correspondent et sont déterminés des paramètres de fluide de refroidissement libres pouvant être déterminés en commun et ceux-ci sont traités au moyen d'un filtre pour le filtrage d'au moins des paramètres de fluide de refroidissement libres,
   le dispositif de réglage primaire comprend : une mesure et un filtre, pour l'au moins un paramètre de fluide de refroidissement libre, notamment le dispositif de réglage primaire comprend un relevé de valeur de mesure pour au moins un ou plusieurs des paramètres de fluide de refroidissement sélectionnés dans le groupe suivant : température de fluide de refroidissement, humidité de fluide de refroidissement, débit massique et/ou volumique du fluide de refroidissement.

7. Procédé selon l'une des revendications précédentes, **caractérisé en ce que** le dispositif de réglage secondaire comprend un dispositif de commande et/ou de régulation au moyen duquel la grandeur de pression de refroidissement est régulée et/ou contrôlée en fonction de la capacité de refroidissement, plus particulièrement de la puissance de refroidissement, prédéterminée,
   la grandeur de pression de refroidissement étant régulée et/ou contrôlée en fonction de la capacité de refroidissement prédéterminée dans le cadre d'un pilotage placé en aval d'une régulation de la grandeur de pression de refroidissement et le dispositif de réglage secondaire comprend un relevé de valeur de mesure pour au moins la grandeur de pression de refroidissement.

8. Procédé selon l'une des revendications précédentes, **caractérisé en ce que**

   - le dispositif de réglage primaire pour la capacité de refroidissement, notamment la puissance de refroidissement, et le dispositif de réglage secondaire pour la pression de refroidissement sont branchés en cascade, le dispositif de réglage primaire comprenant une commande externe et/ou un circuit de régulation externe auquel est subordonné le dispositif de réglage secondaire en tant que commande interne et/ou circuit de régulation interne et/ou

- le dispositif de réglage primaire et le dispositif de réglage secondaire sont couplés par l'intermédiaire du relevé de valeur de mesure pour au moins un paramètre de fluide de refroidissement libre.

9. Procédé selon l'une des revendications précédentes, **caractérisé en ce que**

- sur la base de la capacité de refroidissement souhaitée, notamment la puissance de refroidissement souhaitée, en tant que valeur de consigne du fluide de refroidissement, au moyen du dispositif de réglage primaire, sous la forme d'une boucle de régulation externe, une grandeur de capacité de refroidissement, notamment une grandeur de puissance de refroidissement, est prédéterminée pour un dispositif de réglage secondaire, sous la forme d'une boucle de régulation interne, en tant que grandeur de guidage et

- en fonction de la grandeur de capacité de refroidissement, notamment de puissance de refroidissement, en tant que grandeur de guidage, au moyen du dispositif de réglage secondaire, sur la base de la pression de refroidissement, en tant que valeur effective du fluide de refroidissement, une grandeur de pression de refroidissement est prédéterminée en tant que valeur de consigne, de façon à ce qu'une grandeur de capacité de refroidissement, notamment une grandeur de puissance de refroidissement, en tant que valeur effective du fluide de refroidissement de la grandeur de capacité de refroidissement, notamment de grandeur de puissance de refroidissement, souhaitée, s'approche en tant que valeur de consigne du fluide de refroidissement.

10. Procédé selon l'une des revendications précédentes, **caractérisé en ce que**

- une capacité de refroidissement, notamment une puissance de refroidissement, souhaitée, est prédéterminée en tant que valeur de consigne d'un dispositif de réglage primaire et une valeur effective est déterminée en tant que grandeur de capacité de refroidissement, notamment grandeur de puissance de refroidissement, et un écart entre la valeur de consigne et la valeur effective est utilisé en tant que grandeur de capacité de refroidissement, notamment grandeur de puissance de refroidissement, notamment en tant que grandeur de guidage et

- en fonction de la grandeur de capacité de refroidissement, plus particulièrement la grandeur de puissance de refroidissement, en tant que grandeur de guidage, au moyen du dispositif de réglage secondaire, une grandeur de pression de refroidissement est réglée de façon à ce que l'écart se réduise.

11. Procédé selon l'une des revendications précédentes, **caractérisé en ce que**

- un fluide de refroidissement est introduit, auquel correspondent la pluralité de paramètres de fluide de refroidissement absolus et les paramètres de fluide de refroidissement pour la pluralité de moules à verre sont déterminés en commun avant une répartition du fluide de refroidissement dans les sections de productions et/ou

- le fluide de refroidissement est introduit pour le refroidissement de la pluralité de moules à verre, plus particulièrement de tous les moules à verre, et les paramètres de fluide de refroidissement absolus réglables en commun sont réglés en commun pour une autre pluralité de sections de production de la machine à sections, plus particulièrement toutes les sections de production et/ou

- sans que les paramètres de fluide de refroidissement réglables en commun du fluide de refroidissement soient réglés individuellement pour une ou plusieurs sections de production de l'autre pluralité.

12. Procédé selon l'une des revendications précédentes, **caractérisé en ce que** la grandeur de pression comprend une ou plusieurs des grandeurs qui sont sélectionnées dans le groupe constitué de : pression du fluide de refroidissement, plus particulièrement pression d'écoulement d'un flux de fluide de refroidissement du fluide de refroidissement, plus particulièrement pression d'écoulement d'un flux de fluide de refroidissement, qui est introduit en commun dans une autre pluralité de sections de production de la machine à sections, plus particulièrement une pression du fluide de refroidissement, plus particulièrement une pression d'écoulement d'un flux de fluide de refroidissement du fluide de refroidissement étant déterminée, plus particulièrement mesurée.

13. Procédé selon l'une des revendications précédentes, **caractérisé en ce qu'**une irrégularité du paramètre de fluide de refroidissement et/ou d'une grandeur de capacité de refroidissement ou d'une grandeur influençant celles-ci est déterminée, plus particulièrement il est distingué si l'irrégularité est survenue à la suite d'une intervention extérieure sur une section de production de la machine à sections ou pour une autre raison, et le filtre est conçu pour au moins minimiser l'irrégularité dans le paramètre de fluide de refroidissement et/ou la grandeur de capacité de refroidissement,
une valeur déterminée d'un débit massique et/ou volumique du fluide de refroidissement est d'abord introduite dans un premier filtre de valeurs et la valeur filtrée est ensuite utilisée pour la détermination d'une capacité de refroidissement, plus particulièrement d'une puissance de refroidissement définie et absolue.

14. Procédé selon l'une des revendications précédentes, **caractérisé en ce qu'**une température du fluide de refroidissement et/ou une humidité du fluide de refroidissement est d'abord introduite dans un deuxième filtre de valeurs puis la valeur filtrée est utilisée pour la détermination d'une puissance de refroidissement définie et absolue et

- le premier filtre de valeurs est activé pour le cas où une intervention dans une section de production serait signalée et/ou détectée, qui influence une valeur d'un débit massique et/ou volumique du fluide de refroidissement et/ou
- le deuxième filtre de valeurs est activé pour le cas où une intervention dans une section de production serait signalée et/ou détectée, qui influence une valeur pour la détermination d'une puissance de refroidissement ou capacité de refroidissement absolue définie du fluide de refroidissement.

15. Procédé selon la revendication 13 ou 14, **caractérisé en ce que** le premier et/ou le deuxième filtre de valeurs et/ou un filtre pour une autre valeur de mesure comprend une ou plusieurs unités de filtrage qui sont sélectionnées dans le groupe constitué de : lissage, filtre haute fréquence temporel, calcul continu de valeur moyenne, premier calcul continu de valeur moyenne sur une première échelle de temps et deuxième calcul continu de valeur moyenne sur une deuxième échelle de temps, remplacement de valeurs dépassant une valeur seuil par une valeur de remplacement, plus particulièrement la valeur de remplacement étant une valeur seuil ou une valeur moyenne continue, remplacement de valeurs trop élevées et/ou de valeurs extrêmes.

16. Procédé selon l'une des revendications précédentes, **caractérisé en ce qu'**un filtre de modélisation prévoit une modélisation du débit massique et/ou volumique, le tracé du débit volumique et/ou massique de l'air de refroidissement étant modélisé en fonction de la pression de fluide de refroidissement de l'air de refroidissement.

17. Procédé de fabrication de corps en verre ou de corps creux en verre, dans une machine à sections avec une autre pluralité de sections de production, au moins un moule à verre d'une pluralité de moules à verre correspondant à une section de production des sections de production de la machine à sections et un refroidissement de la pluralité de moules à verre étant régulée avec un fluide de refroidissement et

- pour le refroidissement de la pluralité de moules à verre, le fluide de refroidissement est introduit en commun, l'introduction du fluide de refroidissement commun étant régulée en commun pour la pluralité de moules à verre et, au fluide de refroidissement commun, correspond une pluralité de paramètres de fluide de refroidissement absolus et les paramètres de fluide de refroidissement absolus sont déterminés en tant que paramètre de fluide de refroidissement communs pour la pluralité de moules à verre, **caractérisé en ce que**
- au fluide de refroidissement, en tant que paramètre de fluide de refroidissement absolu pouvant être réglé en commun, correspond et est réglée, plus particulièrement contrôlée et/ou régulée, au moins une capacité de refroidissement, plus particulièrement une puissance de refroidissement, et une pression de refroidissement,
- sur la base d'une capacité de refroidissement souhaitée, plus particulièrement d'une puissance de refroidissement souhaitée, du fluide de refroidissement, au moyen d'un dispositif de réglage primaire, une grandeur de capacité de refroidissement est déterminée et la grandeur de capacité de refroidissement est prédéterminée pour un dispositif de réglage secondaire,
- en fonction de la grandeur de capacité de refroidissement, au moyen du dispositif de réglage secondaire, sur la base de la pression de refroidissement du fluide de refroidissement, une grandeur de pression de refroidissement est prédéterminée, de façon à ce qu'une capacité de refroidissement, plus particulièrement une puissance de refroidissement, du fluide de refroidissement, s'approche de la capacité de refroidissement, plus particulièrement de la puissance de refroidissement, souhaitée du fluide de refroidissement,
- une grandeur décrivant la capacité de refroidissement étant une puissance de refroidissement définie en tenant compte d'un débit massique et/ou volumique du fluide de refroidissement, d'une température du fluide de refroidissement et une humidité du fluide de refroidissement et/ou
- une grandeur décrivant la capacité de refroidissement étant une température du fluide de refroidissement et/ou une humidité du fluide de refroidissement au choix en tenant compte d'un débit massique et/ou volumique du fluide de refroidissement.

18. Procédé de fabrication selon la revendication 17, **caractérisé en ce que**, en tant que fluide de refroidissement, un gaz de refroidissement, un air de refroidissement, une vapeur de refroidissement ou une eau de refroidissement ou un autre fluide est utilisé et/ou la machine à sections est une machine à sections individuelles (machine IS) ou une machine à sections rotatives (machine à soufflage rotatif).

19. Dispositif de commande et/ou de régulation pour la régulation d'un refroidissement d'une pluralité de moules à verre avec un fluide de refroidissement lors d'une fabrication de corps en verre, plus particulièrement de corps creux en verre, dans une machine à sections avec une autre pluralité de sections de production, au moins un des moules à verre correspond à chacune des sections de production de la machine à sections et

- pour le refroidissement de la pluralité de moules à verre, le fluide de refroidissement le fluide de refroidissement est introduit en commun, l'introduction du fluide de refroidissement commun étant régulée en commun pour la pluralité de moules à verre et, au fluide de refroidissement commun, correspond une pluralité de paramètres de fluide de refroidissement absolus et les paramètres de fluide de refroidissement absolus sont déterminés en tant que paramètre de fluide de refroidissement communs pour la pluralité de moules à verre, **caractérisé en ce que**
- au fluide de refroidissement, en tant que paramètre de fluide de refroidissement absolu pouvant être réglé en commun, correspond et est réglée, plus particulièrement contrôlée et/ou régulée, au moins une capacité de refroidissement, plus particulièrement une puissance de refroidissement, et une pression de refroidissement,
- sur la base d'une capacité de refroidissement souhaitée, plus particulièrement d'une puissance de refroidissement souhaitée, du fluide de refroidissement, au moyen d'un dispositif de réglage primaire, une grandeur de capacité de refroidissement peut être déterminée et la grandeur de capacité de refroidissement peut être prédéterminée pour un dispositif de réglage secondaire,
- en fonction de la grandeur de capacité de refroidissement prédéterminée, au moyen du dispositif de réglage secondaire, sur la base de la pression de refroidissement du fluide de refroidissement, une grandeur de pression de refroidissement peut être prédéterminée, de façon à ce qu'une capacité de refroidissement, plus particulièrement une puissance de refroidissement, du fluide de refroidissement, s'approche de la capacité de refroidissement, plus particulièrement de la puissance de refroidissement, souhaitée du fluide de refroidissement,
- une grandeur décrivant la capacité de refroidissement étant une puissance de refroidissement définie en tenant compte d'un débit massique et/ou volumique du fluide de refroidissement, d'une température du fluide de refroidissement et une humidité du fluide de refroidissement et/ou
- une grandeur décrivant la capacité de refroidissement étant une puissance de refroidissement définie en tenant compte d'un débit massique et/ou volumique du fluide de refroidissement, d'une température du fluide de refroidissement et d'une humidité du fluide de refroidissement et/ou
- une grandeur décrivant la capacité de refroidissement étant une température du fluide de refroidissement et/ou une humidité du fluide de refroidissement au choix en tenant compte d'un débit massique et/ou volumique du fluide de refroidissement.

20. Dispositif de fabrication de corps en verre ou de corps creux en verre, avec une machine à sections avec une autre pluralité de sections de production, au moins un moule à verre d'une pluralité de moules à verre correspondant à une section de production des sections de production de la machine à sections et

- pour le refroidissement de la pluralité de moules à verre avec un fluide de refroidissement lors d'une fabrication de corps en verre, un fluide de refroidissement commun à la pluralité de moules à verre est introduit dans les moules à verre, l'introduction du fluide de refroidissement commun étant régulée en commun pour la pluralité de moules à verre et, au fluide de refroidissement commun, correspondant une pluralité de paramètres de fluide de refroidissement absolus et les paramètres de fluide de refroidissement absolus étant déterminés en tant que paramètres de fluide de refroidissement communs pour la pluralité de moules à verre avec un dispositif de commande et/ou de régulation selon la revendication 19, **caractérisé en ce que**, pour la régulation d'un refroidissement de la pluralité de moules à verre, lors de la fabrication de corps en verre :
- au fluide de refroidissement, en tant que paramètre de fluide de refroidissement absolu pouvant être réglé en commun pour la pluralité de moules à verre, correspond et peut être réglée, plus particulièrement contrôlée et/ou régulée, au moins une capacité de refroidissement, plus particulièrement une puissance de refroidissement, et une pression de refroidissement,

- sur la base d'une capacité de refroidissement souhaitée, plus particulièrement d'une puissance de refroidissement souhaitée, du fluide de refroidissement, au moyen d'un dispositif de réglage primaire, une grandeur de capacité de refroidissement peut être déterminée et la grandeur de capacité de refroidissement peut être prédéterminée pour un dispositif de réglage secondaire,

- en fonction de la grandeur de capacité de refroidissement prédéterminée, au moyen du dispositif de réglage secondaire, sur la base de la pression de refroidissement du fluide de refroidissement, une grandeur de pression de refroidissement peut être prédéterminée, de façon à ce qu'une capacité de refroidissement, plus particulièrement une puissance de refroidissement, du fluide de refroidissement, s'approche de la capacité de refroidissement, plus particulièrement de la puissance de refroidissement, souhaitée du fluide de refroidissement,

- une grandeur décrivant la capacité de refroidissement étant une puissance de refroidissement définie en tenant compte d'un débit massique et/ou volumique du fluide de refroidissement, d'une température du fluide de refroidissement et une humidité du fluide de refroidissement et/ou

- une grandeur décrivant la capacité de refroidissement étant une température du fluide de refroidissement et/ou une humidité du fluide de refroidissement au choix en tenant compte d'un débit massique et/ou volumique du fluide de refroidissement.

21. Dispositif de fabrication selon la revendication 20, **caractérisé en ce que**, en tant que fluide de refroidissement, un gaz de refroidissement, plus particulièrement un air de refroidissement, est utilisé et/ou la machine à sections est une machine à sections individuelles (machine IS) ou une machine à sections rotatives (machine à soufflage rotatif).

FIG. 1

FIG. 2

FIG. 3

SE1

SE2

$Q^{KL}_{SOLL}$

$\triangle Q^{KL}$

SET $p_{KL}$

$p_{KL}$-Soll

REGLER $p_{KL}$

MESS $m_{KL}$

$Q^{KL}_{IST}$

MESS $T_{KL}$

MESS $f^{rel}_{KL}$

$p_{IST}$

MESS $p_{KL}$

FILTER $F(m_{KL})$

$Q_{def} \approx F_i(m_{KL}) \cdot T_{KL} \cdot f^{rel}_{KL}$

$i = 1,2,3,4$

EP 3 186 203 B1

31

FIG. 4

FIG. 5

FIG. 6A

EP 3 186 203 B1

FIG. 6B

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1273579 A
- US 5548633 A
- DE 19756313 A1
- EP 1136453 A1
- DE 102004054254 B4
- DE 19728425 C1
- GB 2011128 A
- GB 2182924 A
- US 3953188 A